# EUROPEAN PATENT APPLICATION

(11) **EP 1 047 224 A2**
(43) Date of publication of application: **25.10.2000**
(21) Application number: 00108435.9
(22) Date of filing: 18.04.2000
(51) Int. Cl.: H04L 12/26

(54) **Network security monitor and method of monitoring**

(30) Priority: 23.04.1999 JP 11719799
(71) Applicant: MATSUSHITA ELECTRIC INDUSTRIAL CO., LTD., Kadoma-shi, Osaka 571-8501 (JP)
(72) Inventor: Sasaki, Yuhi, Yokohama-shi (JP); Shinohara, Toshiaki, Omiya-shi (JP); Tsuzuki, Kengo, Machida-shi (JP)
(74) Representative: Kügele, Bernhard

(57) **Abstract**

In a network monitoring apparatus (308), a network configuration detecting unit (102) detects a network configuration by inquiring of a device that has a function of knowing the network configuration. A network configuration recording unit (103) records the network configuration detected. A network configuration comparing unit (104) compares an observation result with a record of a previous observation result. A display unit (105) indicates a warning to the user.

## Description

### BACKGROUND OF THE INVENTION

The present invention relates to security of a network and, in particular, to the security against an unauthorized plugging of a device over a network, the network being capable of establishing the hot plugging the representative of which is IEEE1394.

On account of its simple configuration and high performance, the IEEE1394 is expected to serve as various upcoming inter-device plugging means such as intra-home LAN. The IEEE1394 has a transfer rate of 100 Mbps or more, and is a transfer system suitable for a multimedia data transfer called "Isochronous". Also, the IEEE1394 is provided with a hot plugging function of allowing a device to be added or deleted during the operation of the network by recognizing the plugging of the device automatically. Moreover, it constitutes a tree topology network and can be utilized in a variety of uses.

As one of the uses of the IEEE1394, there can be considered the configuration of a monitoring system using cameras. This is attributed to the fact that the above-described high-speed transfer rate makes it possible to transmit such data as a large quantity of image data. A conventional monitoring system necessitates analogue output cameras in number that are necessary for the monitoring and an A/D conversion mechanism such as video capture boards the number of which is the same as that of the analogue output cameras. Also, the conventional monitoring system necessitates one cable for establishing the connection between the analogue output camera and the video capture board. This condition has required that the cables the number of which is equal to that of the cameras should be routed.

However, in the monitoring system taking advantage of the network like the IEEE1394, that is capable of establishing the hot plugging, the following are possible. First, it is sufficient to plug, as a network monitoring apparatus, at least one personal computer for reception and record with digital output cameras in number that are necessary for the monitoring. Also, by constituting the tree topology network, it is possible to constitute the monitoring system with the use of the cables of fewer numbers.

In the network capable of establishing the hot plugging, it is possible to easily plug a device with the network. It is true that this is a convenient function. However, when an outsider plugs a device unauthorizedly in the network requiring the security like the monitoring system, this function results in a possibility of causing serious problems. Here, examples of the serious problems are tapping or tampering of information over the network and transmission of an unauthorized packet. On account of this, in the network like the IEEE1394 capable of establishing the hot plugging, it is desirable to keep the network itself secure in the following way. A device that is just about to be plugged to the network is monitored so as to judge whether or not it is an unauthorized device, thereby preventing the unauthorized device from being plugged.

### SUMMARY OF THE INVENTION

It is an object of the present invention to provide network monitoring method and apparatus that make it possible to find out a plugging of an unauthorized device toward a network by monitoring addition or deletion of a device to/from the network and a change in the network configuration.

In principle, concerning a device serving as a node of the network, if the plugging state thereof is graspable depending on each port, the knowledge of the network configuration is obtainable. In the IEEE1394 network, although a single device has a plurality of ports, the plugging state thereof is recognizable for each port. Utilizing this condition permits the network configuration to be recognized.

In the network that is capable of establishing the hot plugging, when a device is plugged or deleted to/from the network, it is required to reset the network. This is because the network needs to be initiated, and ID of the device needs to be determined, and so on. After the reset, capabilities and states of the respective devices are exchanged and IDs of the respective devices are determined so as to clarify the network configuration. These processes make it possible to obtain the network configuration and to detect the change in the network configuration.

In the IEEE1394 network, when a new device is plugged or a device plugged already is deleted, a bus reset is applied and the recognition of the network configuration is started. The nodes of the IEEE1394 network have a parent-child relationship of hierarchical topology. After the bus reset, the parent-child relationship is determined first. A node that has only one plugged port is referred to as "a leaf", and is willing to become a child node spontaneously. The leaf informs an adjacent node, which is plugged to the one plugged port, of a report to the effect that the leaf itself is going to become the child node. The adjacent node that has received the report becomes "a parent node". Since the network is guaranteed to be of the tree topology, the node that has become the parent node, sooner or later, encounters either a situation (A) or a situation (B).
(A) All the nodes plugged thereto become child nodes.
(B) Except one node plugged thereto, all the nodes plugged thereto become the child nodes.
In the case of the above-described situation (A), the node becomes a root and, as a result, the construction of the parent-child relationship is terminated. In the case of the above-described situation (B), the node informs an adjacent node, which is plugged to the remaining plugged port, of a report to the effect that the node itself is going to become a child node. After that, the node repeats this operation until the root is determined in a recursive manner.

Once the parent-child relationship is determined, packets referred to as "self-identifying packets" are broadcast in the sequence decided in accordance with the order of the parent-child relationship, thus determining the IDs of the respective nodes one after another. At the time when the IDs of all the nodes have been determined, the construction of the network is terminated. After that, the data- transmission is performed in a usual manner. The self-identifying packets record the plugging states of the respective nodes for each port. A device having a register referred to as "a topology map register" collects the self-identifying packets, thereby clarifying the network configuration. The topology map register stores the self-identifying packets. The devices over the network can recognize the network configuration by checking the topology map register. In addition, the network monitoring apparatus itself collects the self-identifying packets. This also allows the network configuration to be recognized.

As having been described so far, in the IEEE1394 network, it is easy to obtain the network configuration. Moreover, monitoring the change in the network configuration makes it possible to detect the possibility that the unauthorized device has been plugged. In the network capable of establishing the hot plugging, a device that should manage the network is not necessarily determined uniquely, but, in some cases, the administrator is determined through some negotiation. At this time, by monitoring the administrator, it is required to prevent a questionable device from becoming the administrator.

In the IEEE1394 network, a bus manager is guaranteed to have the topology map. Meanwhile, whatever device is allowed to become the bus manager as long as it has the ability therefor. Accordingly, it is also monitored which device will become the bus manager. Also, since an isochronous manager determines the bus manager, the bus manager also monitors which device will become the isochronous manager. In addition, there exists a possibility that, taking advantage of the hot plugging, a node, which makes a false statement on the self-identifying packet or produces no output, is plugged unauthorizedly among normal nodes. Then, the transmission delay is measured and recorded and the variation thereof is detected, thereby detecting the unauthorized node. Also, appropriate information is shared before the reset applied at the time when the network configuration is changed and, after the reset, the authentication is performed using the appropriate information. This procedure makes it possible to detect whether or not a device had existed before the reset. Ordinary authentication is added to these so as to confirm validity of the device, thereby allowing the security of the network to be enhanced even further.

A network monitoring method according to the first aspect of the present invention comprises: a step of observing and recording a network configuration by inquiring of a device, the device having a function of knowing the network configuration; and a step of recognizing a change in the network configuration by extracting a difference between an observation result and a record of a previous observation result, wherein it is monitored that an unauthorized device is plugged to the network. Thereby, the following effects can be provided. It is possible to detect a change in the network configuration without necessitating special means. Also, it is possible to keep the network secure by detecting a possibility that the unauthorized device has been plugged to the network.

A network monitoring apparatus according to the second aspect of the present invention comprises: a network configuration detecting unit for detecting a network configuration by inquiring of a device, the device having a function of knowing the network configuration; a network configuration recording unit for recording the network configuration detected; a network configuration comparing unit for comparing an observation result with a record of a previous observation result; and a display unit for indicating a warning to a user. Thereby, the following effects can be provided. It is possible to detect a change in the network configuration without requiring a network configuration detecting ability toward a monitoring device. Also, it is possible to detect a possibility that an unauthorized device has been plugged to the network.

A network monitoring method according to the third aspect of the present invention comprises: a step of observing and recording a network configuration by inquiring of each device about a plugging state; and a step of recognizing a change in the network configuration by extracting a difference between an observation result and a record of a previous observation result. Thereby, the following effects can be provided. It is possible to detect a change in the network configuration. Also, it is possible to detect a possibility that an unauthorized device has been plugged to the network.

A network monitoring apparatus according to the fourth aspect of the present invention comprises: a network configuration detecting unit for detecting a network configuration by inquiring of each device about a plugging state; a network configuration recording unit for recording the network configuration detected; a network configuration comparing unit for comparing an observation result with a record of a previous observation result; and a display unit for indicating a warning to a user. Thereby, the following effects can be provided. It is possible to detect a change in the network configuration. Also, it is possible to detect a possibility that an unauthorized device has been plugged to the network.

A network monitoring method according to the fifth aspect of the present invention is the network monitoring method according to the first aspect of the present invention and further comprises: a step of providing in advance a condition for being secure; and a step of automatically judging whether or not the network is secure in accordance with said condition. Thereby, the following effects can be provided. It is possible to detect a change in the network configuration without necessitating special means. Also, it is possible to detect a possibility that an unauthorized device has been plugged to the network, to automatically judge whether or not the network is secure, in accordance with the given condition.

A network monitoring apparatus according to the sixth aspect of the present invention is the network monitoring apparatus according to the second aspect of the present invention and further comprises: a tolerable network configuration recording unit for recording in advance a condition for being secure; a judging unit for automatically judging whether or not the network is secure in accordance with the condition, and a warning generating unit for warning a user of a change in the network configuration. Thereby, the following effects can be provided. It is possible to detect a change in the network configuration without necessitating special means. Also, it is possible to detect a possibility that an unauthorized device has been plugged to the network, to automatically judge whether or not the network is secure, in accordance with the given condition.

A network monitoring method according to the seventh aspect of the present invention is the network monitoring method according to the third aspect of the present invention and further comprises: a step of providing in advance a condition for being secure; and a step of automatically judging whether or not the network is secure in accordance with the condition. Thereby, the following effects can be provided. It is possible to detect a change in the network configuration without necessitating special means. Also, it is possible to detect a possibility that an unauthorized device has been plugged to the network, to automatically judge whether or not the network is secure, in accordance with the given condition.

A network monitoring apparatus according to the eighth aspect of the present invention is the network monitoring apparatus according to the fourth aspect of the present invention and further comprises: a tolerable network configuration recording unit for recording in advance a condition for being secure; a judging unit for automatically judging whether or not the network is secure in accordance with the condition; and a warning generating unit for warning a user of a change in the network configuration. Thereby, the following effects can be provided. It is possible to detect a change in the network configuration without necessitating special means. Also, it is possible to detect a possibility that an unauthorized device has been plugged to the network, to automatically judge whether or not the network is secure, in accordance with the given condition.

A network monitoring method according to the ninth aspect of the present invention, comprises: a step of detecting a reset signal of a network configuration; a step of observing and recording the network configuration by inquiring of a device, the device having a function of knowing the network configuration; and a step of recognizing a change in the network configuration by extracting a difference between a record before the reset and a record after the reset. Thereby, the following effects can be provided. It is possible to detect a change in the network configuration without necessitating special means. Also, it is possible to detect a possibility that an unauthorized device has been plugged to the network.

A network monitoring apparatus according to the tenth aspect of the present invention, comprises: a reset detecting unit for detecting a reset signal of a network configuration; a network configuration detecting unit for detecting the network configuration by inquiring of a device, the device having a function of knowing the network configuration; a network configuration recording unit for recording the network configuration detected; a network configuration comparing unit for comparing an observation result with a record of a previous observation result; and a display unit for indicating a warning to a user. Thereby, the following effects can be provided. It is possible to detect a change in the network configuration without necessitating special means. Also, it is possible to detect a possibility that an unauthorized device has been plugged to the network.

A network monitoring method according to the eleventh aspect of the present invention, comprises: a step of observing and recording a network configuration by receiving an identification signal of a device over a network, the identification signal occurring after a reset signal of the network configuration; and a step of recognizing a change in the network configuration by extracting a difference between a record before the reset and a record after the reset. Thereby, the following effects can be provided. It is possible to a change in the network configuration without necessitating special means, without increasing traffic and with a minimum procedure. Also, it is possible to detect a possibility that an unauthorized device has been plugged to the network.

A network monitoring apparatus according to the twelfth aspect of the present invention, comprises: a reset detecting unit for detecting a reset signal of a network configuration; a network configuration detecting unit for detecting the network configuration by receiving an identification signal of a device over a network, the identification signal occurring after the reset; a network configuration recording unit for recording the network configuration detected; a network configuration comparing unit for comparing an observation result with a record of a previous observation result; and a display unit for indicating a warning to a user. Thereby, the following effects can be provided. It is possible to a change in the network configuration without necessitating special means, without increasing traffic and with a minimum procedure. Also, it is possible to detect a possibility that an unauthorized device has been plugged to the network.

A network monitoring method according to the thirteenth aspect of the present invention is the network monitoring method according to the ninth aspect of the present invention and further comprises: a step of providing in advance a condition for being secure; and a step of automatically judging whether or not the network is secure in accordance with the condition. Thereby, the following effects can be provided. It is possible to a change in the network configuration without necessitating special means and with a minimum procedure. Also, it is possible to detect a possibility that an unauthorized device has been plugged to the network, to automatically judge whether or not the network is secure, in accordance with the given condition.

A network monitoring apparatus according to the fourteenth aspect of the present invention is the network monitoring apparatus according to the tenth aspect of the present invention and further comprises: a tolerable network configuration recording unit for recording in advance a condition for being secure; a judging unit for automatically judging whether or not the network is secure in accordance with the condition; and a warning generating unit for warning a user of a change in the network configuration. Thereby, the following effects can be provided. It is possible to a change in the network configuration without necessitating special means and with a minimum procedure. Also, it is possible to detect a possibility that an unauthorized device has been plugged to the network, to automatically judge whether or not the network is secure, in accordance with the given condition.

A network monitoring method according to the fifteenth aspect of the present invention is the network monitoring method according to the eleventh aspect of the present invention and further comprises: a step of providing in advance a condition for being secure; and a step of automatically judging whether or not the network is secure in accordance with the condition. Thereby, the following effects can be provided. It is possible to detect a change in the network configuration without necessitating special means, without increasing traffic and with a minimum procedure. Also, it is possible to detect a possibility that an unauthorized device has been plugged to the network, to automatically judge whether the network is secure or not, in accordance with a given condition.

A network monitoring apparatus according to the sixteenth aspect of the present invention is the network monitoring apparatus according to the twelfth aspect of the present invention and further comprises: a tolerable network configuration recording unit for recording in advance a condition for being secure; a judging unit for automatically judging whether or not the network is secure in accordance with the condition; and a warning generating unit for warning a user of a change in the network configuration. Thereby, the following effects can be provided. It is possible to detect a change in the network configuration without necessitating special means, without increasing traffic and with a minimum procedure. Also, it is possible to detect a possibility that an unauthorized device has been plugged to the network, to automatically judge whether the network is secure or not, in accordance with a given condition.

A network monitoring method according to the seventeenth aspect of the present invention, comprises: a step of detecting network configurations with the use of a plurality of means; and a step of judging whether or not there exists a contradiction among said network configurations obtained from the respective means. Thereby, the following effects can be provided. It is possible to maintain fault tolerance. Also, it is possible to detect a possibility that an unauthorized device has been plugged to the network, by detecting an unauthorized topology map.

A network monitoring apparatus according to the eighteenth aspect of the present invention, comprises: at least one network configuration detecting unit for detecting network configurations with the use of a plurality of network configuration acquiring means; a recording unit for recording the network configurations detected; and a comparing unit for investigating whether or not there exists a contradiction among the network configurations detected. Thereby, the following effects can be provided. It is possible to maintain fault tolerance by having a plurality of network configuration acquiring means. Also, it is possible to detect a possibility that an unauthorized device has been plugged to the network, by detecting the network configuration acquiring means that has reported an unauthorized network configuration.

A network monitoring method according to the nineteenth aspect of the present invention, has a capability of knowing and managing a network configuration by itself; becomes a manager managing a network; and issues a warning to a monitor or a higher-order network monitoring apparatus when the network monitoring method has failed to become the manager. Thereby, the following effect can be provided. It is possible to prevent takeover of a manager that manages the network.

A network monitoring method according to the twentieth aspect of the present invention, has a capability of managing an isochronous transfer and a resource thereof by itself; becomes a manager managing the isochronous transfer; and issues a warning to a monitor or a higher-order network monitoring apparatus. Thereby, the following effect can be provided. It is possible to prevent takeover of a manager that manages an isochronous transfer.

A network monitoring method according to the twenty-first aspect of the present invention, comprises: a step of observing and recording a transmission delay between devices; and a step of recognizing a change in a network configuration by judging a difference between an observation result and a record of a previous observation result to recognize a change in the transmission delay. Thereby, the following effect can be provided. It is possible to detect a possibility that an unauthorized device has been plugged to the network.

A network monitoring apparatus according to the twenty-second aspect of the present invention, comprises: a transmission delay detecting unit for observing a transmission delay between devices; a recording unit for recording the transmission delay; a change detecting unit for detecting a change in the transmission delay by judging a difference between an observation result and a record of a previous observation result and by comparing the difference with a detecting condition; and a warning generating unit for warning a user of a change in the network configuration. Thereby, the following effect can be provided. It is possible to detect a possibility that an unauthorized device which does not behave as a node has been plugged to the network.

A network monitoring apparatus according to the twenty-third aspect of the present invention, comprises: a detecting condition recording unit for setting and recording a transmission delay-detecting condition; a packet sending unit for sending a transmission delay-measuring packet; a packet receiving unit for receiving an acknowledgement in response to the transmission delay-measuring packet; a recording unit for recording the transmission delay; a change detecting unit for detecting a change in the transmission delay by judging a difference between an observation result and a record of a previous observation result and by comparing the difference with the transmission delay-detecting condition; and a warning generating unit for warning a user of a change in the network configuration. Thereby, the following effect can be provided. It is possible to detect a possibility that an unauthorized device which does not behave as a node has been plugged to the network.

A network monitoring apparatus according to the twenty-fourth aspect of the present invention, comprises: a packet monitoring unit for monitoring, over a network, a data packet and an acknowledgement in response to the data packet; a recording unit for recording a transmission delay; a change detecting unit for detecting a change in the transmission delay by judging a difference between an observation result and a record of a previous observation result and by comparing the difference with a detecting condition; and a warning generating unit for warning a user of a change in a network configuration. Thereby, the following effect can be provided. It is possible to detect a possibility that an unauthorized device which does not behave as a node has been plugged to the network.

Here, the packet monitoring unit is included in the transmission delay detecting unit of the network monitoring apparatus according to the twenty-second aspect of the present invention.

A network monitoring method according to the twenty-fifth aspect of the present invention comprises; a step of exchanging information in advance before a network configuration is reset, in a network system including a plurality of devices; and a step of executing, after the reset, an authentication based on the information exchanged in advance to recognize a device that had existed before the reset, a newly added device, and a deleted device. Thereby, the following effect can be provided. It is possible to find out an unauthorized device plugged newly to the network, by identifying devices that had existed before the reset.

A network monitoring apparatus according to the twenty-sixth aspect of the present invention comprises: a key generating unit for generating information exchanged before a network configuration is reset; a recording unit for recording the information before the reset; a reset detecting unit for detecting the reset; and a device authentication processing unit for executing, after the bus reset, an authentication in accordance with the information exchanged in advance. Thereby, the following effect can be provided. It is possible to find out an unauthorized device plugged newly to the network, by identifying devices that had existed before the reset.

A network monitoring system according to the twenty-seventh aspect of the present invention comprises: any one of the network monitoring methods and network monitoring apparatuses according to the first to twenty-sixth aspects of the present invention. Thereby, the following effect can be provided. It is possible to safely perform transmission/reception of data over the network by keeping the network secure.

### BRIEF DESCRIPTION OF THE DRAWINGS

Fig. 1 is a conceptual diagram for explaining a network monitoring method according to a first embodiment of the present invention;
Fig. 2 is a flow chart for indicating configuration of a network monitoring method according to a second embodiment of the present invention;
Fig. 3 is a block diagram for indicating configuration of a network monitoring apparatus according to a third embodiment of the present invention;
Fig. 4 is a flow chart for indicating configuration of a network monitoring method according to a fourth embodiment of the present invention;
Fig. 5 is a block diagram for indicating configuration of a network monitoring apparatus according to a fifth embodiment of the present invention;
Fig. 6 is a block diagram for indicating configuration of a network monitoring apparatus according to a sixth embodiment of the present invention;
Fig. 7 is a flow chart for indicating configuration of a network monitoring method according to a seventh embodiment of the present invention;
Fig. 8 is a block diagram for indicating configuration of a network monitoring apparatus according to an eighth embodiment of the present invention;
Fig. 9 is a flow chart for indicating configuration of a network monitoring method according to a ninth embodiment of the present invention;
Fig. 10 is a block diagram for indicating configuration of a network monitoring apparatus according to a tenth embodiment of the present invention;
Fig. 11 is a block diagram for indicating configuration of a network monitoring apparatus according to an eleventh embodiment of the present invention;
Fig. 12 is a flow chart for indicating configuration of a network monitoring method according to a twelfth embodiment of the present invention;
Fig. 13 is a block diagram for indicating configuration of a network monitoring apparatus according to a thirteenth embodiment of the present invention;
Fig. 14 is a flow chart for indicating configuration of a network monitoring method according to a fourteenth embodiment of the present invention;
Fig. 15 is a block diagram for indicating configuration of a network monitoring apparatus according to a fifteenth embodiment of the present invention;
Fig. 16 is a conceptual diagram of monitoring recording tables of the network monitoring apparatus according to the fifteenth embodiment of the present invention;
Fig. 17 is a block diagram for indicating configuration of a network monitoring apparatus according to a sixteenth embodiment of the present invention;
Fig. 18 is a conceptual diagram of a monitoring condition table and a monitoring recording table of the network monitoring apparatus according to the sixteenth embodiment of the present invention;
Fig. 19 is a conceptual diagram of a network monitoring method according to a seventeenth embodiment of the present invention;
Fig. 20 is a block diagram of a network monitoring apparatus according to an eighteenth embodiment of the present invention; and
Fig. 21 is a conceptual diagram of a monitoring system according to a nineteenth embodiment of the present invention.

### DESCRIPTION OF THE EMBODIMENTS

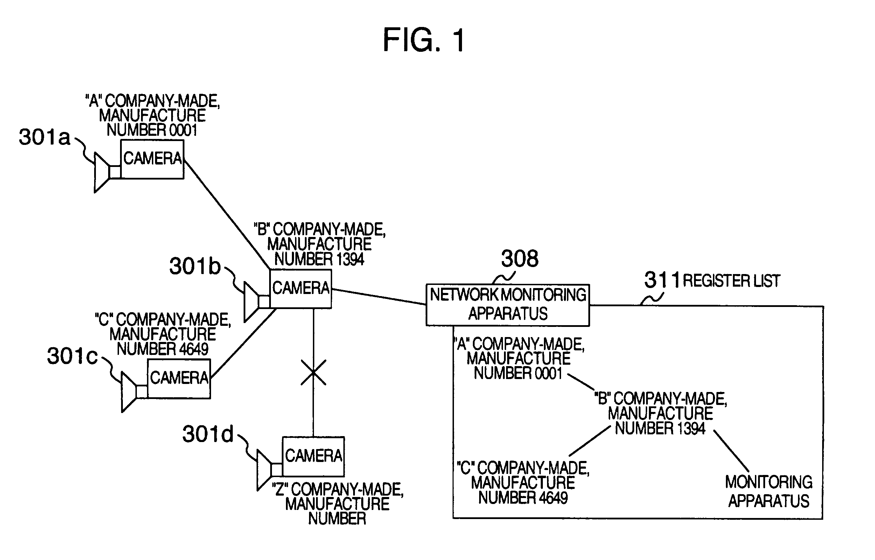

Hereinafter, referring to the accompanying drawings of Figs. 1-20, the detailed explanation will be given below concerning the embodiments of the present invention. Incidentally, here, the explanation will be given assuming that the network capable of establishing the hot plugging is the IEEE1394 network. Also, in the following explanation, the network configuration means information about to what number port of which device what number port of which device is plugged. In addition, detecting the network configuration refers to grasping of the relationship among the nodes and arks within the network. As methods of detecting the network configuration, there exist the following: a method of inquiring of a device having the topology map in the physical layer such as the bus manager, a method of inquiring of a device about the plugging state thereof, a method in which the network monitoring apparatus itself becomes the bus manager, and so on.

The method of inquiring of a device having the topology map provides an effect of making it possible to recognize the network configuration even if the network monitoring apparatus has no specific capability. The method of inquiring of a device about the plugging state thereof provides an effect of making it possible to recognize the network configuration without directly accessing the physical layer and an effect of making it possible to simultaneously deal with information other than the network configuration. In the method in which the network monitoring apparatus itself becomes the bus manager, the network monitoring apparatus can use the following two pieces of information in judgement on the security: information as to whether or not a device other than the network monitoring apparatus itself has been determined as the bus manager, or information as to whether or not a device other than itself has stood for as a candidate of the bus manager. Obtaining these two pieces of information provides an effect of making it possible to find out an unauthorized device that pretends to be and tries to behave as the bus manager. In the case where the network monitoring apparatus itself does not become the bus manager, the network monitoring apparatus itself may become the isochronous manager that determines the bus manager. At this time, the network monitoring apparatus can use the following three pieces of information in judgement on the security: information as to whether or not a device other than the network monitoring apparatus itself has been determined as the isochronous manager, or information as to whether or not a device other than itself has stood for as a candidate of the isochronous manager, or information as to whether or not a device other than a device that the network monitoring apparatus itself has determined as the bus manager has stood for as a candidate of the bus manager. Obtaining these three pieces of information provides an effect of making it possible to find out an unauthorized device that pretends to be and tries to behave as the isochronous manager or the bus manager.

As conditions of a secure network configuration, the following are used: a list of secure network configurations, a list of devices tolerated to be plugged to the network and the plugging positions thereof, a set of the devices tolerated to be plugged, a topology of arcs among the devices tolerated to be plugged, a list of tolerable changes in the network configuration, an equation and so on describing these logically, or combination of these.

### (First Embodiment)

Fig. 1 is a diagram for explaining a network monitoring method according to the first embodiment of the present invention. In Fig. 1, the reference numerals denote the following, respectively: 301a-301d cameras constituting a network, 308 a network monitoring apparatus, and 311 a register list of devices and networks registered in the network monitoring apparatus.

Next, referring to Fig. 1, the explanation will be given below concerning the network monitoring method according to the first embodiment of the present invention. The network monitoring apparatus 308 has the capability of acquiring the network configuration and has means for obtaining information characteristic of the respective network devices. Here, the explanation will be given below regarding the case where IDs of the respective devices are used as the information and the maker and the manufacture number are used as the IDs of the respective devices. The network monitoring apparatus 308 has the register list 311 that registers tolerable network devices and network configurations. The content of the register list 311 may be registered in advance. Otherwise, the network monitoring apparatus 308 may update the content by recording the monitoring results. Here, the register list 311 registers the network monitoring apparatus 308, the camera 301a, the camera 301b, and the camera 301c. The present devices over the network and the present network configuration are tolerated because they coincide with the content of the register list 311.

It is assumed that the camera 301d is plugged to the network. At that time, the network devices over the network and the network configuration are changed. The network monitoring apparatus 308 acquires information on the network devices and the network configuration, then comparing them with the register list 311. If the information on the network devices and the network configuration do not coincide with the content of the register list 311 the network monitoring apparatus 308 issues a warning.

The network monitoring method according to the first embodiment of the present invention is configured as described above. Consequently, it is possible to implement a network monitoring method that, by utilizing the information on the network devices and the network configuration, makes it possible to detect a possibility that an unauthorized device has been plugged to the network.

### (Second Embodiment)

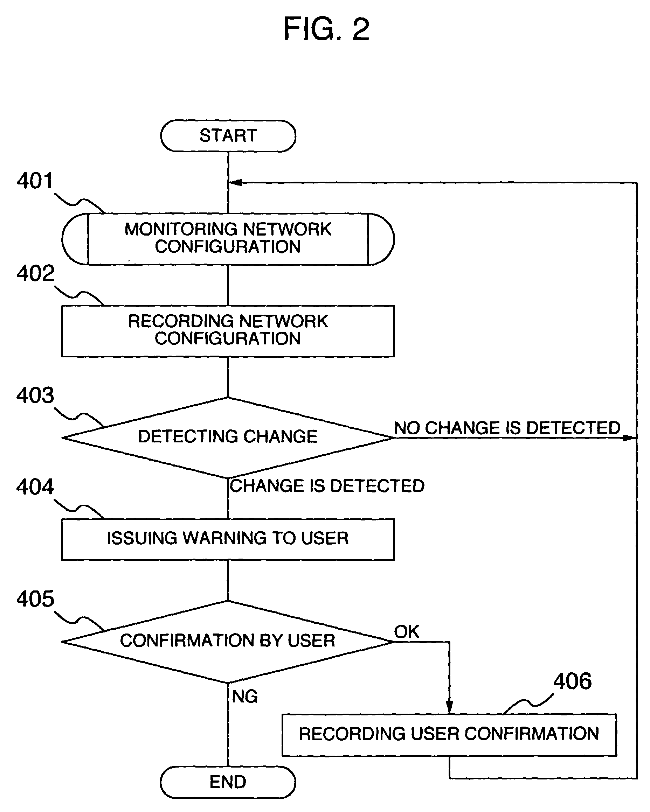

Fig. 2 is a flow chart of a network monitoring method according to the second embodiment of the present invention. In Fig. 2, the reference numerals denote the following, respectively: 401 a monitoring phase of the network configuration, 402 a recording phase of the network configuration, 403 a change detecting phase of the network configuration, 404 a phase of issuing a warning to a user, 405 a phase of receiving a confirmation made by the user, and 406 a phase of recording the reception of the confirmation made by the user.

Next, referring to Fig. 2, the explanation will be given below concerning a network monitoring method according to the second embodiment of the present invention. The monitor detects the network configuration at a preset time (401). As the detecting time, any one of the following is used: immediately after the bus reset, a fixed time interval, a random time interval, a time during which there exists less traffic, immediately before or after a specific event, a time that the user has specified, any arbitrary time, and so on. The network configuration detected is recorded (402). The detected network configuration is compared with a network configuration recorded in the past or with a network configuration set specially (403). As the result of the comparison, if no change is recognized, go back to the phase 401 and standby until the next detection of the network configuration. As the result of the comparison, if a change is recognized, the warning is issued to the user (404). The user that has received the warning judges whether or not the present network configuration is secure. If the user judges that the network configuration is secure, after a report to the effect that the network configuration is secure is recorded (406), go back to the phase 401 and standby until the next detection of the network configuration.

Incidentally, as the warning 404 toward the user, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring method according to the second embodiment of the present invention is configured as described above. Consequently, it is possible to implement a network monitoring method that, by detecting the change in the network configuration, makes it possible to detect a possibility that an unauthorized device has been plugged to the network.

### (Third Embodiment)

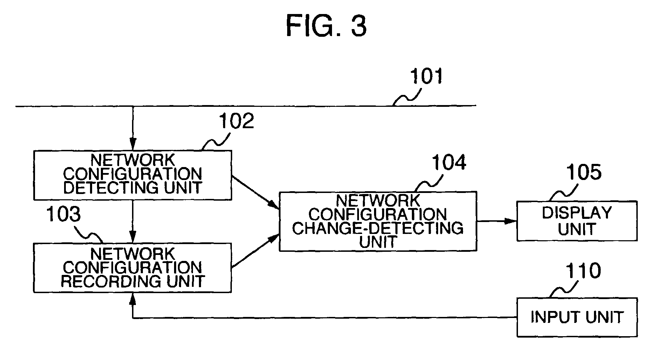

Fig. 3 is a block diagram for indicating configuration of a network monitoring apparatus according to the third embodiment of the present invention. In Fig. 3, the reference numerals denote the following, respectively: 101 a network, 102 a network configuration detecting unit for detecting the network configuration, 103 a network configuration recording unit for recording the network configuration, 104 a network configuration change-detecting unit for detecting a change in the network configuration, 105 a display unit for displaying the change in the network configuration, and 110 an input unit for receiving an input from the user.

Next, referring to Fig. 3, the explanation will be given below concerning the operation of the network monitoring apparatus according to the third embodiment of the present invention. At first, in a state where the network configuration is secure, the network configuration detecting unit 102 detects the present secure network configuration. The network configuration recording unit 103 records the detected network configuration in such a manner that security information of "being secure" is added thereto. Next, the network configuration detecting unit 102 detects the network configuration. The network configuration change-detecting unit 104 compares the present network configuration with the secure network configuration recorded. If there exists a change in the network configuration, the network configuration change-detecting unit 104 detects the change, then outputting the detected change to the display unit 105. Having received the input from the network configuration change-detecting unit 104, the display unit 105 displays toward the user the change in the network configuration. Also, when the change in the network configuration is detected, the network configuration recording unit 103 records the new network configuration in such a manner that security information of "being not secure" is added thereto. The user, seeing the display unit 105, ascertains whether or not the new network configuration is a secure network configuration. If the new network configuration is secure, the user inputs, into the input unit 110, a report to the effect that the new network configuration is secure. The network configuration recording unit 103 receives the input from the input unit 1tenthen rewriting, as "being secure", the security information added to the new network configuration.

Incidentally, in place of the display unit 105, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring apparatus according to the third embodiment of the present invention is configured as described above. Consequently, it is possible to implement a network monitoring apparatus that, by detecting the change in the network configuration, makes it possible to detect a possibility that an unauthorized device has been plugged to the network.

### (Fourth Embodiment)

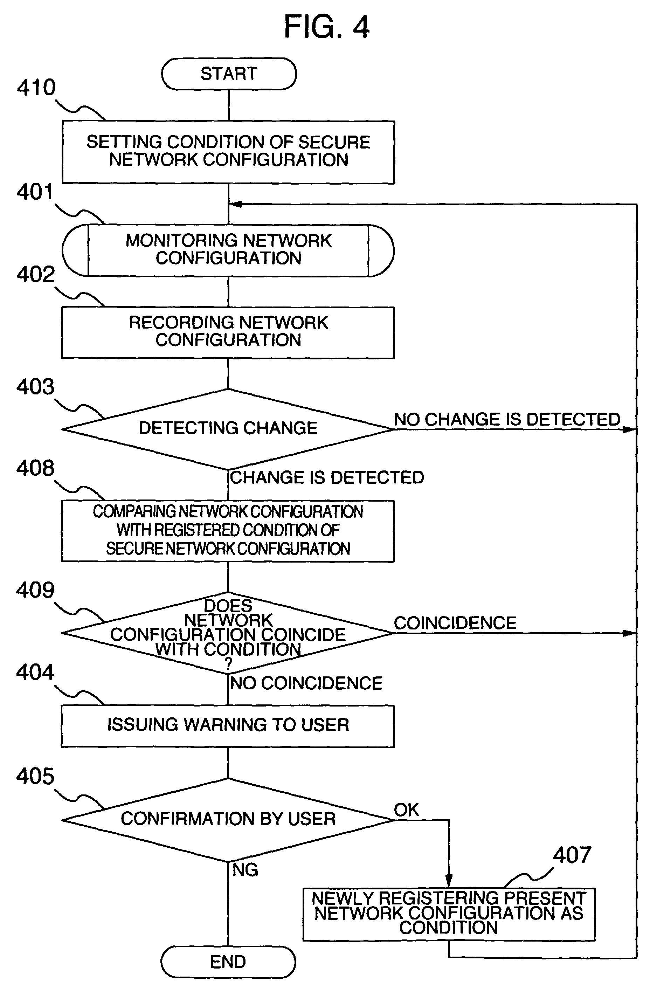

Fig. 4 is a flow chart of a network monitoring method according to the fourth embodiment of the present invention. Incidentally, the respective configuration elements having the same reference numerals as those of the respective configuration elements illustrated in Fig. 2 are the same configuration elements. Accordingly, the explanation thereof will be omitted. In Fig. 4, the reference numerals denote the following, respectively: 407 a phase of newly registering a condition that the present network configuration is secure, 408 a phase of comparing the registered condition of the secure network configuration with the present network configuration, 409 a phase of judging whether or not the present network configuration is secure as the result of the comparison, and 410 a phase of setting the condition of the secure network configuration.

Next, referring to Fig. 4, the explanation will be given below concerning the network monitoring method according to the fourth embodiment of the present invention. At first, a condition for judging whether or not the network configuration is secure is set (410). The monitor detects the network configuration at a preset detecting time (401). As the detecting time, any one of the following is used: immediately after the bus reset, a fixed time interval, a random time interval, a time during which there exists less traffic, immediately before or after a specific event, a time that the user has specified, any arbitrary time, and so on. The network configuration detected is recorded (402). The detected network configuration is compared with a network configuration recorded in the past or with a network configuration set specially (403). As the result of the comparison, if no change is recognized, go back to the phase 401 and standby until the next detection of the network configuration. As the result of the comparison, if a change is recognized, the present network configuration detected is compared with the condition of the secure network configuration (408), thereby judging whether or not the present network configuration coincides with the condition (409). If the present network configuration coincides with the condition of the secure network configuration, go back to the phase 401 and standby until the next detection of the network configuration. If the present network configuration does not coincide with the condition of the secure network configuration, the warning is issued to the user (404). The user that has received the warning judges whether or not the present network configuration is secure. If the user judges that the present network configuration is secure, after newly registering the present network configuration as the condition of the secure network configuration (407), go back to the phase 401 and standby until the next detection of the network configuration.

Incidentally, as the warning 404 toward the user, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring method according to the fourth embodiment of the present invention is configured as described above. Consequently, it is possible to implement a network monitoring method that, by detecting the change in the network configuration, makes it possible to detect a possibility that an unauthorized device has been plugged to the network, and makes it possible to automatically judge whether the network is secure or not in accordance with a given condition.

### (Fifth Embodiment)

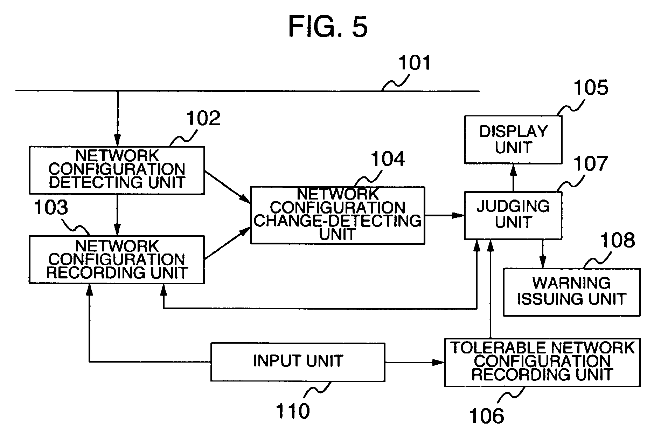

Fig. 5 is a block diagram for indicating configuration of a network monitoring apparatus according to the fifth embodiment of the present invention. Incidentally, the respective configuration elements having the same reference numerals as those of the respective configuration elements illustrated in Fig. 3 are the same configuration elements. Accordingly, the explanation thereof will be omitted. In Fig. 5, the reference numerals denote the following, respectively: 106 a tolerable network configuration recording unit for recording a network configuration assumed in advance to be secure, 107 a judging unit for judging whether or not, when a network configuration is changed, the new network configuration is secure, and 108 a warning issuing unit for issuing a warning when the changed new network configuration is judged to be not secure.

Next, referring to Fig. 5, the explanation will be given below concerning the operation of the network monitoring apparatus according to the fifth embodiment of the present invention. At first, the user registers, into the tolerable network configuration recording unit 106, a network configuration that has been recognized as being secure. Also, the network configuration detecting unit 102 detects the present secure network configuration. The network configuration recording unit 103 records the detected network configuration in such a manner that security information of "being secure" is added thereto. Next, the network configuration detecting unit 102 detects the network configuration. The network configuration change-detecting unit 104 compares the present network configuration with the secure network configuration recorded. If there exists a change in the network configuration, the network configuration change-detecting unit 104 detects the change, then outputting the detected change to the judging unit 107. Also, when the change in the network configuration is detected, the network configuration recording unit 103 records the new network configuration in such a manner that security intonation of "being not secure" is added thereto. Having received the input from the network configuration change-detecting unit 10fourthe judging unit 107 compares the new network configuration with the network configuration, the network configuration being recorded in the tolerable network configuration recording unit 106 and being identified as being secure. If the new network configuration is included in the network configuration recorded in the tolerable network configuration recording unit 106 and identified as being secure, the judging unit 107 rewrites, as "being secure", the security intonation added to the new network configuration recorded in the network configuration recording unit 103. At this time, the judging unit 107 may output, to the warning issuing unit 108, a report to the effect that the network configuration has been changed. Meanwhile, if the new network configuration is not included in the network configuration recorded in the tolerable network configuration recording unit 106 and identified as being secure, the judging unit 107 outputs, to the warning issuing unit 108, a report to the effect that the new network configuration is not included. Having received the input from the judging unit 10seventhe warning issuing unit 108 issues the warning to the user. The user, seeing the display unit 105, ascertains whether or not the new network configuration is a secure network configuration. If the new network configuration is secure, the user inputs, into the input unit 110, a report to the effect that the new network configuration is secure. The network configuration recording unit 103 receives the input from the input unit 1tenthen rewriting, as "being secure", the security information added to the new network configuration. Also, when the new network configuration is secure, the user is also able to add a new network configuration to the tolerable network configuration recording unit 10sixthrough the input unit 110.

Incidentally, the warning issuing unit 108 may perform a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring apparatus according to the fifth embodiment of the present invention is configured as described above. Consequently, it is possible to implement a network monitoring apparatus that, by detecting the change in the network configuration, makes it possible to detect a possibility that an unauthorized device has been plugged to the network, and makes it possible to automatically judge whether the network is secure or not in accordance with a given condition.

### (Sixth Embodiment)

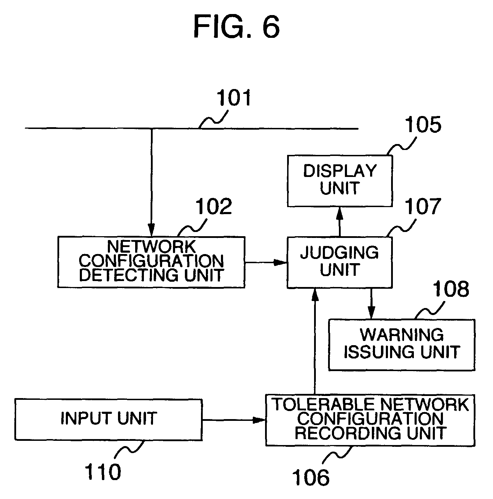

Fig. 6 is a block diagram for indicating configuration of a network monitoring apparatus according to the sixth embodiment of the present invention. This network monitoring apparatus has a configuration resulting from omitting the network configuration recording unit 103 and the network configuration change-detecting unit 104 in the configuration of the network monitoring apparatus according to the fifth embodiment illustrated in Fig. 5. In the case of such a configuration, in comparison with the fifth embodiment, it is required to make the judgement even when there is no change in the network configuration. As a result, although the processes to be executed by the judging unit 107 are increased, the entire configuration becomes simplified.

The network monitoring apparatus according to the sixth embodiment of the present invention is configured as described above. Consequently, it is possible to implement a network monitoring apparatus that allows the change in the network configuration to be detected based on the simplified configuration and that, in accordance with information given in advance, makes it possible to automatically detect a possibility that an unauthorized device has been plugged to the network.

### (Seventh Embodiment)

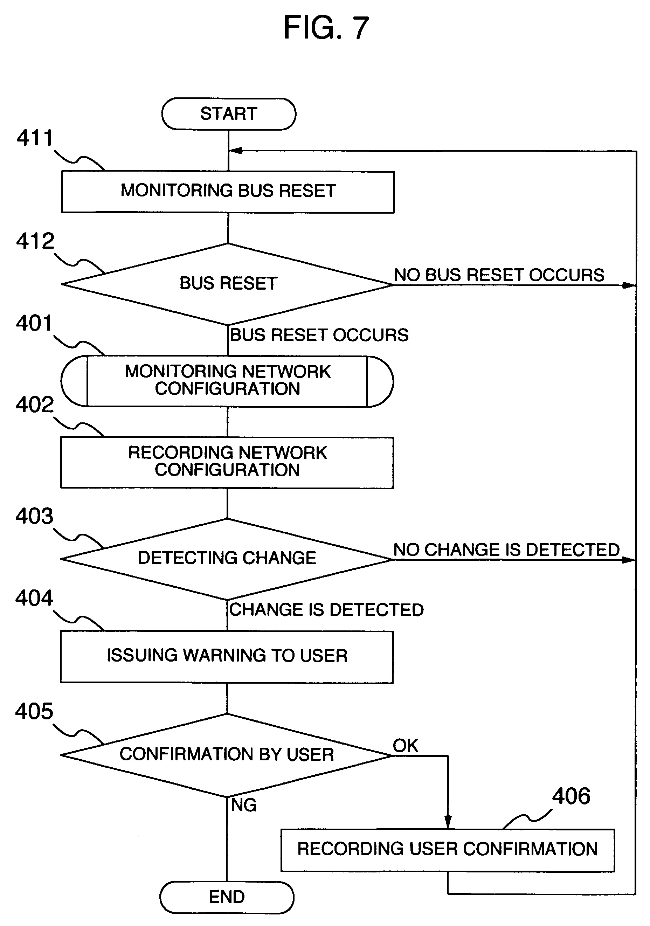

Fig. 7 is a flow chart of a network monitoring method according to the seventh embodiment of the present invention. The respective configuration elements having the same reference numerals as those of the respective configuration elements illustrated in Fig. 2 are the same configuration elements. Accordingly, the explanation thereof will be omitted. In Fig. 7, the reference numerals denote the following, respectively: 411 a bus reset monitoring phase, and 412 a phase of judging whether or not the bus reset has occurred.

Next, referring to Fig. 7, the explanation will be given below concerning the network monitoring method according to the seventh embodiment of the present invention. The monitor detects whether or not the bus reset has been generated (411). If no bus reset has been generated, it comes to a standby state (412). If the bus reset has been generated, the network configuration is detected (401). The network configuration detected is recorded (402). The detected network configuration is compared with a network configuration recorded in the past or with a network configuration set specially (403). As the result of the comparison, if no change is recognized in the network configuration, go back to the phase 411 and it comes to a standby state until the detection of the next bus reset. Meanwhile, as the result of the comparison, if a change is recognized in the network configuration, the warning is issued to the user (404). The user that has received the warning judges whether or not the present network configuration is secure. If the user judges that the network configuration is secure, after a report to the effect that the network configuration is secure is recorded (406), go back to the phase 401 and it comes to the standby state until the detection of the next bus reset.

Incidentally, as the warning 404 toward the user, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring method according to the seventh embodiment of the present invention is configured as described above. Consequently, it is possible to implement a network monitoring method, the network monitoring method allowing the change in the network configuration to be detected with a minimum procedure, and automatically judging whether the network is secure or not in accordance with a given condition by detecting a possibility that an unauthorized device has been plugged to the network.

### (Eighth Embodiment)

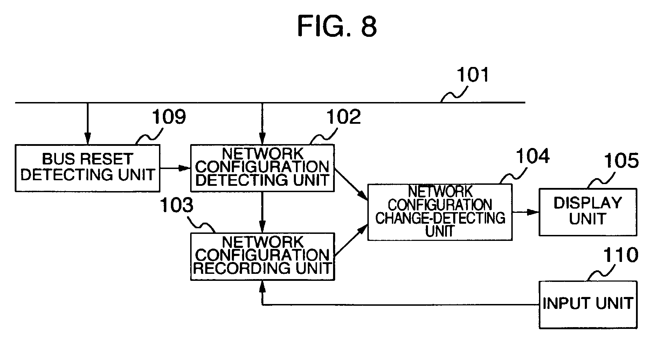

Fig. 8 is a block diagram for indicating configuration of a network monitoring apparatus according to the eighth embodiment of the present invention. The respective configuration elements having the same reference numerals as those of the respective configuration elements illustrated in Fig. 3 are the same configuration elements. Accordingly, the explanation thereof will be omitted. In Fig. 8, the reference numeral 109 denotes a bus reset detecting unit for detecting a bus reset of the network.

Next, referring to Fig. 8, the explanation will be given below concerning the operation of the network monitoring apparatus according to the eighth embodiment of the present invention. At first, in a state where the network is secure, the network configuration detecting unit 102 detects the present secure network configuration. The network configuration recording unit 103 records the detected present network configuration in such a manner that security information of "being secure" is added thereto. Having detected the bus reset of the network, the bus reset detecting unit 10ninthen outputs, to the network configuration detecting unit 102, a report to the effect that the bus reset has been detected. Receiving the report, the network configuration detecting unit 102 detects the network configuration after the bus reset. The network configuration change-detecting unit 104 compares the present network configuration with the secure network configuration recorded. If there is a change in the network configuration, the network configuration change-detecting unit 104 detects the change, then outputting the detected change to the display unit 105. Having received the input from the network configuration change-detecting unit 10fourthe display unit 105 displays toward the user the change in the network configuration. Also, when the change in the network configuration is detected, the network configuration recording unit 103 records the new network configuration in such a manner that security information of "being not secure" is added thereto. The user, seeing the display unit 105, ascertains whether or not the new network configuration is a secure network configuration. If the new network configuration is secure, the user inputs, into the input unit 110, a report to the effect that the new network configuration is secure. The network configuration recording unit 103 receives the input from the input unit 1tenthen rewriting, as "being secure", the security information added to the new network configuration.

Incidentally, in place of the display unit 105, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring apparatus according to the eighth embodiment of the present invention is configured as described above. Consequently, it is possible to implement a network monitoring apparatus that, by detecting with a minimum procedure the change in the network configuration accompanying the bus reset, makes it possible to detect a possibility that an unauthorized device has been plugged to the network.

### (Ninth Embodiment)

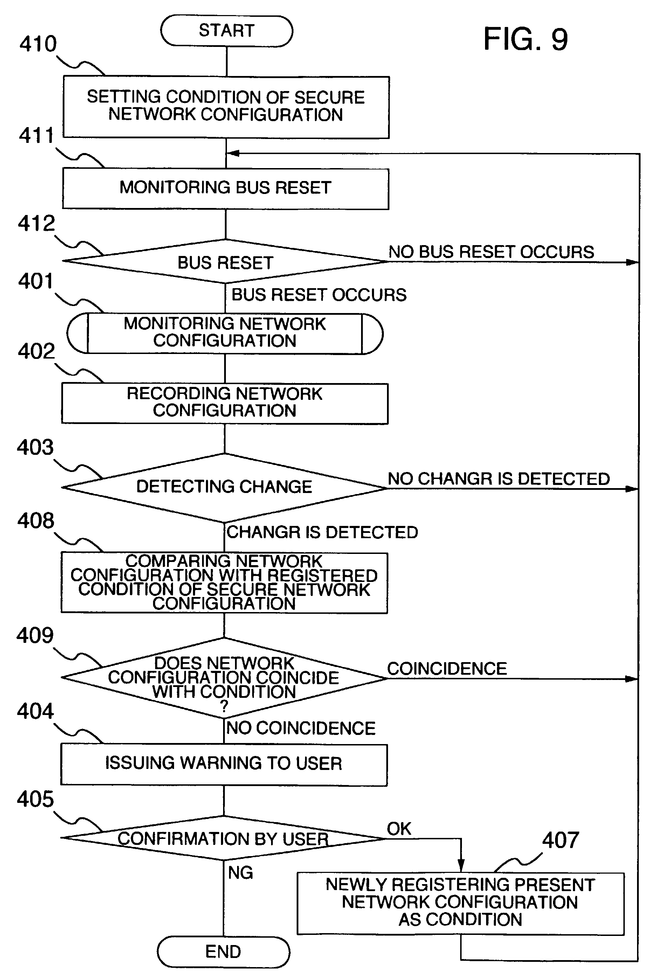

Fig. 9 is a flow chart of a network monitoring method according to the ninth embodiment of the present invention. The respective configuration elements having the same reference numerals as those of the respective configuration elements illustrated in Figs. 4 and 7 are the same configuration elements. Accordingly, the explanation thereof will be omitted.

Next, referring to Fig. 9, the explanation will be given below concerning the network monitoring method according to the ninth embodiment of the present invention. At first, a condition for judging whether or not the network configuration is secure is set (410). The monitor detects whether or not the bus reset has been generated (411). If no bus reset has been generated, it comes to a standby state (412). If the bus reset has been generated, the network configuration is detected (401). The network configuration detected is recorded (402). The detected network configuration is compared with a network configuration recorded in the past or with a network configuration set specially (403). As the result of the comparison, if no change is recognized in the network configuration, go back to the phase 401 and it comes to a standby state until the detection of the next bus reset. Meanwhile, as the result of the comparison, if a change is recognized in the network configuration, the present network configuration detected is compared with the condition of the secure network configuration (408), thereby judging whether or not the present network configuration coincides with the condition (409). If the present network configuration coincides with the condition of the secure network configuration, go back to the phase 411 and it comes to a standby state until the detection of the next bus reset. If the present network configuration does not coincide with the condition of the secure network configuration, the warning is issued to the user (404). The user that has received the warning judges whether or not the present network configuration is secure. If the user judges that the present network configuration is secure, after newly registering the present network configuration as the condition of the secure network configuration (407), go back to the phase 411 and it comes to the standby state until the detection of the next bus reset.

Incidentally, as the warning 404 toward the user, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring method according to the ninth embodiment of the present invention is configured as described above. Consequently, it is possible to implement a network monitoring method that, by detecting the change in the network configuration with a minimum procedure, makes it possible to detect a possibility that an unauthorized device has been plugged to the network, and that makes it possible to automatically judge whether the network is secure or not in accordance with a given condition.

### (Tenth Embodiment)

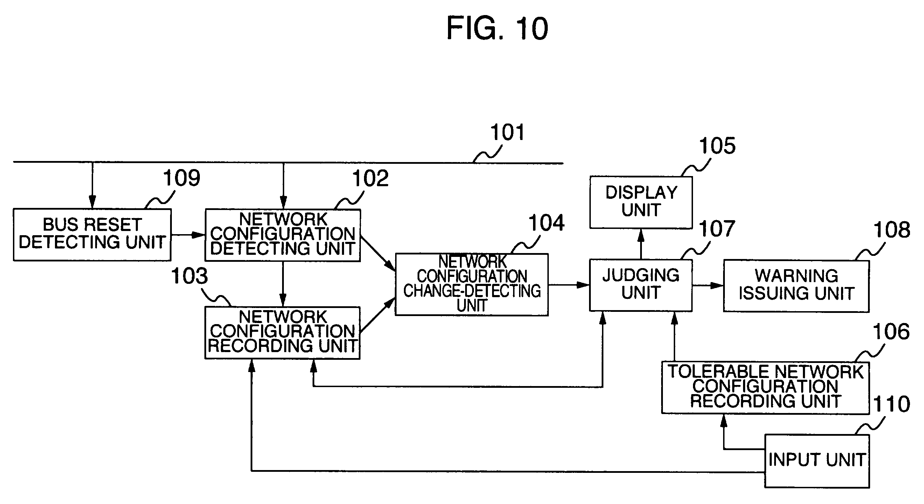

Fig. 10 is a block diagram for indicating configuration of a network monitoring apparatus according to the tenth embodiment of the present invention. Incidentally, the respective configuration elements having the same reference numerals as those of the respective configuration elements illustrated in Figs. 5 and 8 are the same configuration elements. Accordingly, the explanation thereof will be omitted.

Next, referring to Fig. 10, the explanation will be given below concerning the operation of the network monitoring apparatus according to the tenth embodiment of the present invention. At first, the user registers, into the tolerable network configuration recording unit 106, a network configuration that has been recognized as being secure. Also, the network configuration detecting unit 102 detects the present secure network configuration. The network configuration recording unit 103 records the network configuration in such a manner that security information of "being secure" is added thereto. Having detected the bus reset of the network, the bus reset detecting unit 10ninthen outputs, to the network configuration detecting unit 102, a report to the effect that the bus reset has been detected. Receiving the report, the network configuration detecting unit 102 detects the network configuration after the bus reset. The network configuration change-detecting unit 104 compares the present network configuration with the secure network configuration recorded. If there is a change in the network configuration, the network configuration change-detecting unit 104 detects the change, then outputting the detected change to the judging unit 107. Also, when the change in the network configuration is detected, the network configuration recording unit 103 records the new network configuration in such a manner that security information of "being not secure" is added thereto. Having received the input from the network configuration change-detecting unit 10fourthe judging unit 107 compares the new network configuration with the network configuration, the network configuration being recorded in the tolerable network configuration recording unit 106 and being identified as being secure. If the new network configuration is included in the network configuration recorded in the tolerable network configuration recording unit 106 and identified as being secure, the judging unit 107 rewrites, as "being secure", the security information added to the new network configuration recorded in the network configuration recording unit 103. At this time, the judging unit 107 may output, to the warning issuing unit 108, a report to the effect that the network configuration has been changed. Meanwhile, if the new network configuration is not included in the network configuration recorded in the tolerable network configuration recording unit 106 and identified as being secure, the judging unit 107 outputs, to the warning issuing unit 108, a report to the effect that the new network configuration is not included. Having received the input from the judging unit 107, the warning issuing unit 108 issues the warning to the user. The user, seeing the display unit 105, ascertains whether or not the new network configuration is a secure network configuration. If the new network configuration is secure, the user inputs, into the input unit 110, a report to the effect that the new network configuration is secure. The network configuration recording unit 103 receives the input from the input unit 110, then rewriting, as "being secure", the security information added to the new network configuration. Also, when the new network configuration is secure, the user is also able to add a new network configuration to the tolerable network configuration recording unit 10sixthrough the input unit 110.

Incidentally, the warning issuing unit 108 may perform a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring apparatus according to the tenth embodiment of the present invention is configured as described above. Consequently, it is possible to implement a network monitoring apparatus, the network monitoring apparatus detecting with a minimum procedure the change in the network configuration accompanying the bus reset and, in accordance with information given in advance, making it possible to automatically detect a possibility that an unauthorized device has been plugged to the network.

### (Eleventh Embodiment)

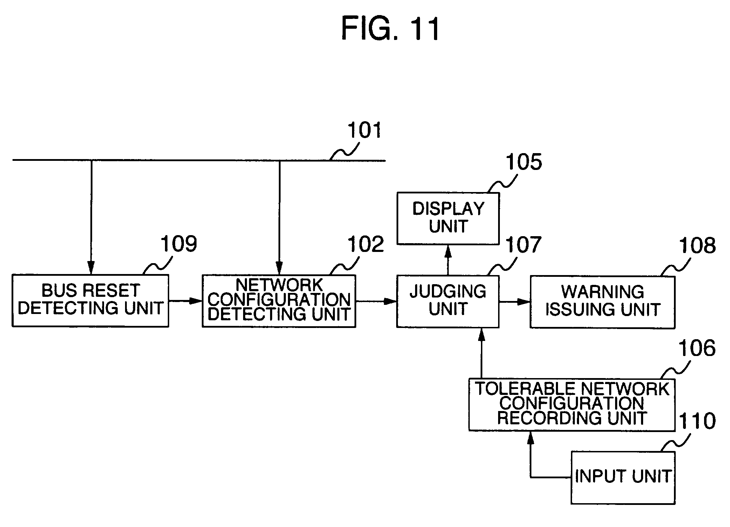

Fig. 11 is a block diagram for indicating configuration of a network monitoring apparatus according to the eleventh embodiment of the present invention. This network monitoring apparatus has a configuration resulting from omitting the network configuration recording unit 103 and the network configuration change-detecting unit 104 in the configuration of the network monitoring apparatus according to the tenth embodiment illustrated in Fig. 10. In the case of such a configuration, in comparison with the tenth embodiment, it is required to make the judgement even when there is no change in the network configuration. As a result, although the processes to be executed by the judging unit 107 are increased, the entire configuration becomes simplified.

The network monitoring apparatus according to the eleventh embodiment of the present invention is configured as described above. Consequently, it is possible to implement a network monitoring apparatus, the network monitoring apparatus detecting, based on the simplified configuration and with a minimum procedure, the change in the network configuration accompanying the bus reset and, in accordance with information given in advance, making it possible to automatically detect a possibility that an unauthorized device has been plugged to the network.

### (Twelfth Embodiment)

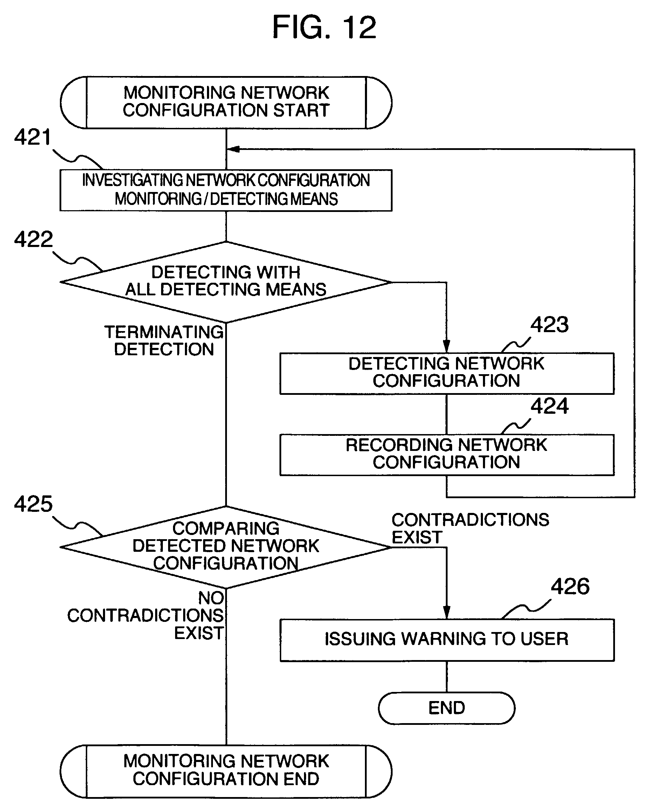

Fig. 12 is a flow chart of a network monitoring method according to the twelfth embodiment of the present invention. The reference numerals denote the following, respectively: 421 a phase of investigating a plurality of network configuration detecting means, 422 a phase of using all the network configuration detecting means available, 423 a phase of detecting a plurality of network configurations, 424 a phase of recording the network configurations detected, 425 a phase of comparing the plurality of network configurations detected by the plurality of network configuration detecting means and investigating whether or not there exist contradictions among he network configurations, and 426 a phase of issuing a warning to the user.

Next, referring to Fig. 12, the explanation will be given below concerning the network monitoring method according to the twelfth embodiment of the present invention. At first, an investigation is performed as to what types of means are available as the network configuration detecting means for detecting the network configurations (421). Using the network configuration detecting means obtained in the phase 421, the detection of the network configurations is performed (422). The respective network configuration detecting means detect the network configurations (423), and the network configurations detected are recorded (424). Additionally, all the network configuration detecting means are supposed to be used here, it is allowable to limit means for actually detecting the network configurations, such as the specified number of the means, the specified detecting times and the specified means. The plurality of network configurations detected are compared with each other, thereby investigating whether or not there exist contradictions among the network configurations (425). If there exist the contradictions among the plurality of network configurations detected, the warning is issued to the user (426). This is because there are possibilities that an unauthorized device exists over the network, or the devices or the network configuration detecting means are out of order. Meanwhile, if there exist no contradictions among the plurality of network configurations detected, the network configurations are regarded as correct, then being outputted. When there exist the contradictions among the plurality of network configurations detected by the plurality of network configuration detecting means, based on the information, it is possible to detect untrustworthy network configuration detecting means. In much the same way, it is possible to detect faults of the network configuration detecting means. Also, the possession of the plurality of network configuration detecting means allows the present network monitoring method to become fault-tolerant toward the faults of the network configuration detecting means.

Incidentally, when the warning is issued to the user in the phase 426, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring method according to the twelfth embodiment of the present invention is implemented as described above. Consequently, it is possible to implement a network monitoring method, the network monitoring method making it possible to maintain the fault tolerance by having the plurality of network configuration acquiring means and, by detecting the unauthorized topology map, making it possible to detect a possibility that an unauthorized device has been plugged to the network.

### (Thirteenth Embodiment)

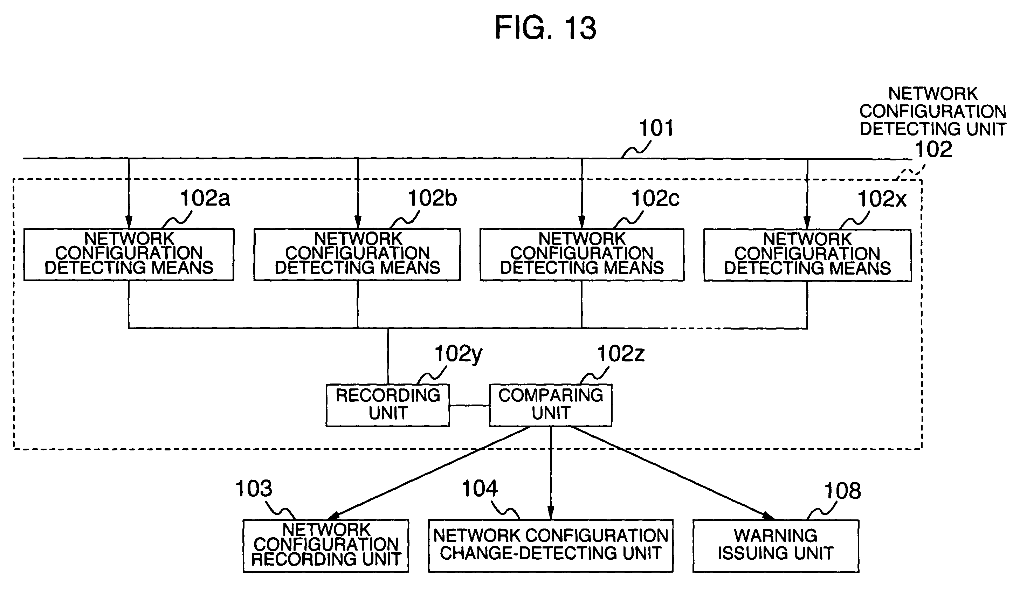

Fig. 13 is a block diagram for indicating configuration of a network monitoring apparatus according to the thirteenth embodiment of the present invention. Additionally, the respective configuration elements having the same reference numerals as those of the respective configuration elements illustrated in Fig. 3 are the same configuration elements. Accordingly, the explanation thereof will be omitted. Fig. 13 illustrates the internal configuration of the network configuration detecting unit 102. The reference numerals denote the following, respectively: 102a-102x network configuration detecting means existing in plural number, 102y a recording unit for recording network configurations detected, 102z a comparing unit for comparing the network configurations detected by the plurality of network configuration detecting means and investigating whether or not there exist contradictions among the network configurations.

Next, referring to Fig. 13 the explanation will be given below concerning the operation of the network monitoring apparatus according to the thirteenth embodiment of the present invention. Here, the explanation will be given regarding the internal configuration of the network configuration detecting unit 102. When it comes to a time to detect the network configurations or when receiving an instruction for carrying out the detection, the network configuration detecting unit 102 carries out the detection of the network configurations. The plurality of network configuration detecting means 102a-102x detect the network configurations, respectively. Then, the plurality of network configuration detecting means 102a-102x that have acquired the network configurations record the network configurations into the recording unit 102y. Moreover, the comparing unit 102z compares the network configurations, which have been detected by the plurality of network configuration detecting means and recorded in the recording unit 102y, and thereby investigates whether or not there exist the contradictions among the network configurations with each other. If no contradictions are recognized among the plurality of network configurations detected, the network configurations are outputted to the network configuration recording unit 103 and the network configuration change-detecting unit 104. Meanwhile, if the contradictions are recognized among the plurality of network configurations detected, a report to the effect that the contradictions are recognized is outputted to the warning issuing unit 108. When there exist the contradictions among the plurality of network configurations obtained by the plurality of network configuration detecting means, based on the information, it is possible to detect untrustworthy network configuration detecting means. In much the same way, it is possible to detect faults of the network configuration detecting means. Also, the possession of the plurality of network configuration detecting means 102a-102x allows the present network monitoring apparatus to become fault-tolerant toward the faults of the network configuration detecting means.

The network monitoring apparatus according to the thirteenth embodiment of the present invention is configured as described above. Consequently, it is possible to implement a network monitoring apparatus, the network monitoring apparatus making it possible to maintain the fault tolerance by having the plurality of network configuration acquiring means and, by detecting the unauthorized topology map, making it possible to detect a possibility that an unauthorized device has been plugged to the network. Also, it is possible to implement the network monitoring apparatus according to the thirteenth embodiment of the present invention as the network configuration detecting unit of the other network monitoring apparatuses. This implementation permits the security level to be enhanced.

### (Fourteenth Embodiment)

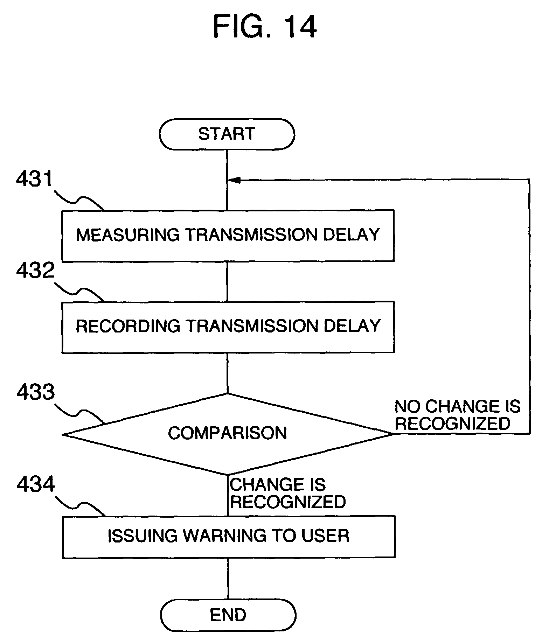

Fig. 14 is a flow chart of a network monitoring method according to the fourteenth embodiment of the present invention. The reference numerals denote the following, respectively: 431 a phase of measuring a transmission delay time, 432 a phase of recording the transmission delay time measured, 433 a phase of comparing the transmission delay time so as to detect a change in the transmission delay time, and 434 a phase of issuing a warning to the user.

Next, referring to Fig. 14 the explanation will be given below concerning the network monitoring method according to the fourteenth embodiment of the present invention. The monitor measures the transmission delay time over the network at a preset measuring time (431). As the measuring time, any one of the following is used: immediately after the bus reset, a fixed time interval, a random time interval, a time during which there exists less traffic, immediately before or after a specific event, a time that the user has specified, any arbitrary time, and so on. As measuring means, there exist means of sending a delay-measuring packet to a measurement object node so as to observe the acknowledgement in response thereto, a mean of observing a request packet flowing over the network and the acknowledgement in response thereto, and so on. The transmission delay time thus measured is recorded (432). The newly recorded transmission delay time is compared with a transmission delay time recorded in the past or with a preset transmission delay time (433). As the result of the comparison, if no change is recognized in the transmission delay time, go back to the phase 431 and waits for the next measuring time for the transmission delay. Meanwhile, as the result of the comparison, if a change is recognized in the transmission delay time, the warning is issued to the user (434).

Incidentally, when the warning is issued to the user in the phase 434, there may be performed a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring method according to the fourteenth embodiment of the present invention is implemented as described above. Consequently, it is possible to implement a network monitoring method, the network monitoring method making it possible to measure the transmission delay and, based on the change in the transmission delay, making it possible to detect a possibility that an unauthorized device has been plugged to the network. Also, by using the present network monitoring method simultaneously with any one of the network monitoring methods or the network monitoring apparatuses according to the first to the twentieth aspects described earlier, it becomes possible to monitor the network from the two types of information, i.e., the network configuration and the transmission delay between the nodes. This condition brings about an effect of permitting the security level of the network to be enhanced.

### (Fifteenth Embodiment)

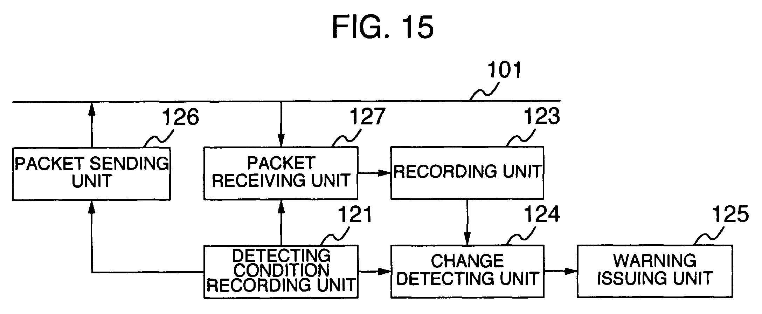

Fig. 15 is a block diagram for indicating configuration of a network monitoring apparatus according to the fifteenth embodiment of the present invention. The reference numerals denote the following, respectively: 101 a network, 121 a detecting condition-recording unit for recording detecting conditions set toward network devices, 123 a recording unit for recording monitoring information, 124 a change detecting unit for detecting a change in the transmission delay from the record, 125 a warning issuing unit for issuing a warning when the changed is detected, 126 a packet sending unit for sending a delay-checking packet, and 127 a packet receiving unit for receiving the delay-checking packet.

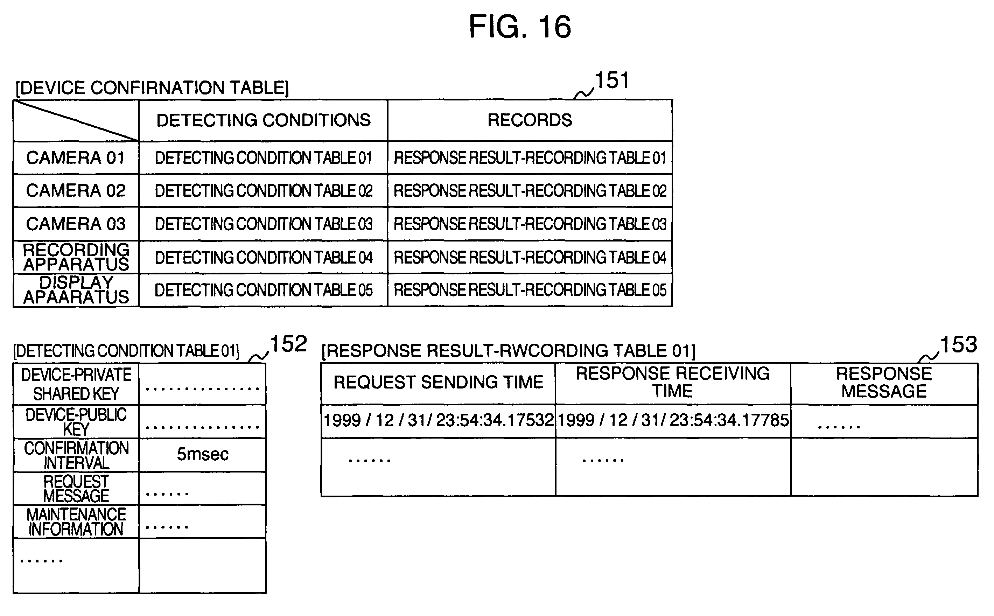

Fig. 16 is a conceptual diagram of recording tables used in the detecting condition-recording unit 121 and the recording unit 123. The reference numerals denote the following, respectively: 151 a device confining table that manages the respective detecting condition tables and response result-recording tables for each device, 152 a detecting condition table for recording the detecting conditions, and 153 a response result-recording table for recording a sending time to send a packet and a receiving time to receive a response packet returning from a network device.

Next, referring to Figs. 15 and 16, the explanation will be given below concerning the operation of the network monitoring apparatus according to the fifteenth embodiment of the present invention. At first, the user sets and registers the detecting conditions into the detecting condition-recording unit 121. Then, in accordance with the retrieving conditions, the packet sending unit 126 sends the delay-measuring packet to the network device. The packet receiving unit 127 receives the response packet that has returned from the network device as the response to the delay-measuring packet. The packet monitored is recorded into the recording unit 123. Based on the record in the recording unit 123 and the detecting conditions in the detecting condition-recording unit 121, the change detecting unit 124 detects whether or not there exists an intolerable change in the transmission delay. If the intolerable change in the transmission delay is detected, the warning issuing unit 125 issues the warning to the user.

Incidentally, the detecting conditions set and registered in the detecting condition-recording unit 121 are as follows: the detecting time, the detecting time interval, the detecting frequency, range of the tolerable change, conditions on the routes such as pop count, cable length and repeating devices, conditions on specific devices, device-private shared key, device-public key, conditions on the sending packet, information about the devices, and so on. Also, the recording unit 123 may record a time between the request packet and the response packet in response thereto, and in addition to this, may record dump of a packet, a portion of the packet, the content of the packet, and so on. Further, the warming issuing unit 125 may perform a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring apparatus according to the fifteenth embodiment of the present invention is configured as described above, Consequently, it is possible to implement a network monitoring apparatus, the network monitoring apparatus making it possible to measure the transmission delay and, based on the change in the transmission delay, making it possible to detect a possibility that an unauthorized device has been plugged to the network. Also, by using the present network monitoring apparatus simultaneously with any one of the network monitoring methods or the network monitoring apparatuses according to the first to the 20th aspects described earlier, it becomes possible to monitor the network from the two types of information, i.e., the network configuration and the transmission delay between the nodes. This condition brings about an effect of permitting the security level of the network to be enhanced.

### (Sixteenth Embodiment)

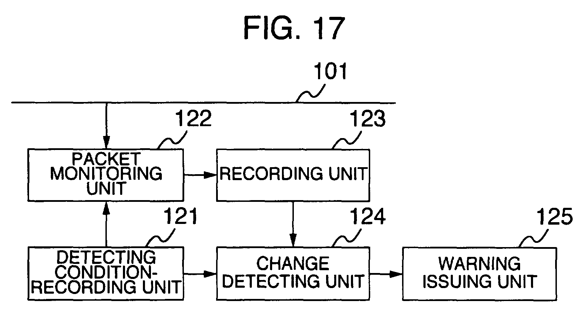

Fig. 17 is a block diagram for indicating configuration of a network monitoring apparatus according to the sixteenth embodiment of the present invention. The reference numerals denote the following, respectively: 101 a network, 121 a detecting condition-recording unit for recording detecting conditions set toward network devices, 122 a packet monitoring unit for monitoring a packet over the network, 123 a recording unit for recording monitoring information, 124 a change detecting unit for detecting a change in the transmission delay from the record, and 125 a warning issuing unit for issuing a warning when the changed in the transmission delay is detected.

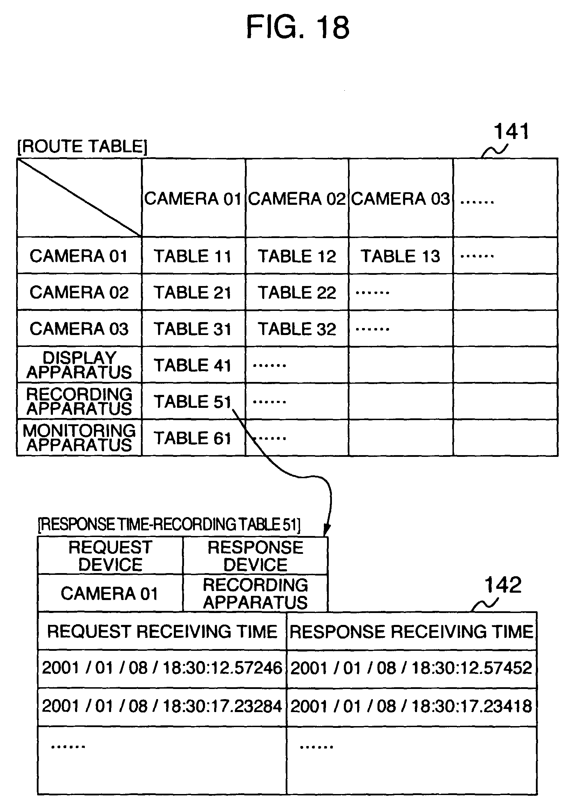

Fig. 18 is a conceptual diagram of recording tables used in the recording unit 123. The reference numerals denote the following, respectively: 141 a table for recording inter-device routes and response time-recording tables, and 142 a table for recording inter-device response times.

Next, referring to Figs. 17 and 18, the explanation will be given below concerning the operation of the network monitoring apparatus according to the sixteenth embodiment of the present invention. At first, the user sets and registers the detecting conditions into the detecting condition-recording unit 121. Then, in accordance with the retrieving conditions, the packet monitoring unit 122 monitors the packet over the network. The packet monitored is recorded into the recording unit 123. As indicated in Fig. 18, the monitoring is executed on the basis of an inter-device route. Times at which a request packet and a response packet in response thereto are each observed in pair are recorded. Based on the record in the recording unit 123 and the detecting conditions in the detecting condition-recording unit 121, the change detecting unit 124 detects whether or not there exists an intolerable change in the transmission delay. If the intolerable change in the transmission delay is detected, the warning issuing unit 125 issues the warning to the user.

Incidentally, the detecting conditions set and registered in the detecting condition-recording unit 121 are as follows: the detecting time, the detecting time interval, the detecting frequency, the packet to be detected, range of the tolerable change, conditions on the route such as pop count, cable length and repeating devices concerning an inter-device route, conditions on the route such as pop count, cable length and repeating devices concerning a route between a device and the network monitoring apparatus, conditions on specific devices, and so on. Also, the recording unit 123 may record a time between the request packet and the response packet in response thereto, and in addition to this, may record dump of a packet, a portion of the packet, the content of the packet, and so on. Further, the warming issuing unit 125 may perform a warning that utilizes a warning sound or a voice, or a warning that uses an indication together with the warning sound or the voice. Also, there may be presented the warning reason and information becoming its judgement material. Also, there may be performed, simultaneously with the warning, a countermeasure of stopping the network operation or a countermeasure of forcefully cutting off the network plugging.

The network monitoring apparatus according to the sixteenth embodiment of the present invention is configured as described above. Consequently, it is possible to implement a network monitoring apparatus, the network monitoring apparatus making it possible to measure the transmission delay without increasing traffic of the network and with the simplified configuration and, based on the change in the transmission delay, making it possible to detect a possibility that an unauthorized device has been plugged to the network. Also, by using the present network monitoring apparatus simultaneously with any one of the network monitoring methods or the network monitoring apparatuses according to the first to the 20th aspects described earlier, it becomes possible to monitor the network from the two types of information, i.e., the network configuration and the transmission delay between the nodes. This condition brings about an effect of permitting the security level of the network to be enhanced.

### (Seventeenth Embodiment)

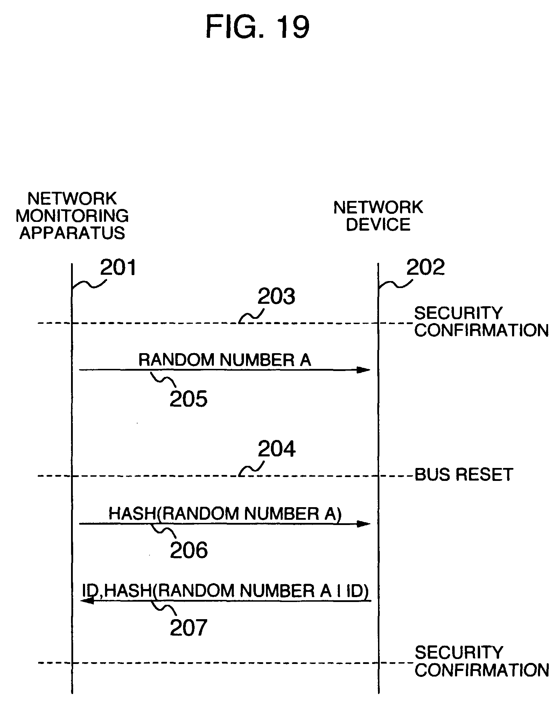

Fig. 19 is a conceptual diagram of the behavior of a network and a network monitoring apparatus according to the seventeenth embodiment of the present invention. The reference numerals denote the following, respectively: 201 a network monitoring apparatus, and 202 a network device as an object to be monitored. Also, the reference numeral 203 indicates that the network has been confirmed to be secure, and 204 indicates that a bus reset has been applied to the network. Moreover, the reference numerals denote the following, respectively: 205 pre-bus reset information to be exchanged in advance before the bus reset, 206 an authentication information request to be exchanged after the bus reset, and 207 authentication information.

The network devices plugged to the network according to the seventeenth embodiment of the present invention have a capability of exchanging information with each other and recording the information thus exchanged. The devices over the network exchange the information in advance before the bus reset is generated, and use the information after the bus reset is generated. This process allows the implementation of the operation that is independent of the bus reset. For example, the names characteristic of the respective devices or sets of the virtual IDs and the physical IDs characteristic thereof are exchanged before the bus reset and, after the bus reset also, the information similar to the above is exchanged. This process makes it possible to obtain a conversion table of the physical IDs of the respective devices that change before and after the bus reset. This conversion table allows the implementation of the operation that is independent of the physical IDs, and also makes it possible to recognize the change in the network configuration.

Next, referring to Fig. 19, the explanation will be given below regarding one example of the operation of the network and the network monitoring apparatus according to the seventeenth embodiment of the present invention. Here, the information exchanged before the bus reset is used as a private key after the bus reset, thereby performing the authentication of the network device. First, it is necessary that the security of the network be confirmed through the security confirmation 203. Here, it is confirmed that the network lies in a state where, over the network, there exists none of the network devices that commit unauthorized operations or that can be utilized to realize ill wills. By the way, it is possible to deal with the information over a secure network as private information. Accordingly, at this time, the network monitoring apparatus 201 sends, to the network device 202, the pre-bus reset information 20fifthat is to become the private key. Since this information must not be predicted, it is assumed here that a random number is employed as this information. Hereinafter, this random number is referred to as "random number A". The network monitoring apparatus 201 and the network device 202 stores the pre-bus reset information 205.

The generation of the bus reset 204 indicates a possibility that a new device has been plugged to the network. Consequently, the security of the network cannot be guaranteed after the generation. At this time, the authentication of the network device 202 is executed using the pre-bus reset information 20fifthe network monitoring apparatus 201 sends, to the network device 202 and together with the authentication information request 206, information (here, a value resulting from substituting the random number A into a function) included in the pre-bus reset information 205. Here, Hash function is employed as the function. Although, when this function is a one-direction function the inverse transformation of which is impossible or difficult, this function is permitted to have been publicized, at least the network device 202, i.e., the object to be monitored, needs to know this function. Here, the value resulting from substituting the random number A into the function is referred to as "Hash (random number A)".

The network device 202 that has received the authentication information request, based on the pre-bus reset information and the function known already, calculates the Hash (random number A) included in the authentication information request 206, thereby confirming that the network monitoring apparatus 201 is just the network monitoring apparatus between which and the network device the pre-bus reset information had been exchanged. After the confirmation, the network device sends, to the network monitoring apparatus, "Hash (random number A|ID)" and the ID of the network device as the authentication information 207. Here, the Hash (random number A|ID) results from substituting into the function a value obtained by performing an exclusive-OR (XOR) operation of the random number A and the ID. The reason why the network device performs the exclusive-OR operation of the random number A and the ID is that a return of the authentication information 207 in a state of remaining unchanged from the authentication information request 206 will give rise to a trouble. Instead of the exclusive-OR operation, the following other methods may be employed. A different function known already is used, the network monitoring apparatus 201 sends a salt simultaneously with the authentication information request 206 so as to take advantage of it, and an appropriate value of the random number or the like is used instead of the ID, and so on. The network monitoring apparatus 201 that has received the authentication information 207, based on the random number A and the ID, calculates the Hash (random number A|ID), thereby being able to confirm that the network device 202 is just the network device between which and the network monitoring apparatus the pre-bus reset information had been exchanged. This process is performed concerning all the devices, thereby making it possible to execute the authentication of the devices that had been plugged before the bus reset. In order to prevent the pretended behavior, this process had better be performed for each device. Concretely, it is advisable to alter the random number of the pre-bus reset information 205 for each device.

The network and the network monitoring apparatus according to the seventeenth embodiment of the present invention are configured as described above. Consequently, it is possible to obtain a network that is able to utilize, after the bus reset, the information exchanged before the bus reset. Also, the pre-bus reset information is utilized as described above, thereby making it possible to obtain the network and the network monitoring apparatus that are able to execute the authentication of the devices that had existed before the bus reset.

### (Eighteenth Embodiment)

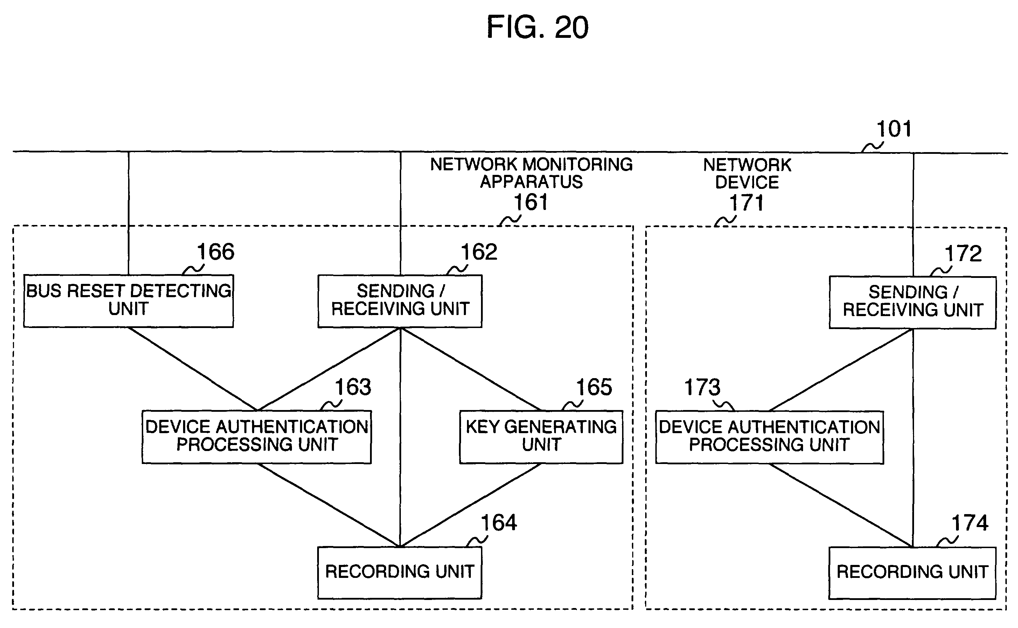

Fig. 20 is a block diagram for indicating configurations of a network monitoring apparatus and a network device according to the eighteenth embodiment of the present invention. The reference numerals denote the following, respectively: 101 a network, and 161 a network monitoring apparatus. In the network monitoring apparatus 161, the reference numerals denote the following: 162 a sending/receiving unit, 163 a device authentication processing unit for performing a device authentication processing, 164 a recording unit, 165 a key generating unit, and 166 a bus reset detecting unit. The reference numeral 171 denotes a network device. 172 a sending/receiving unit in the network device, 173 a device authentication processing unit in the network device, and 174 a recording unit in the network device.

Next, referring to Fig. 20, the explanation will be given below regarding the operations of the network monitoring apparatus and the network device according to the eighteenth embodiment of the present invention. After the network has been confirmed to be secure, the key generating unit 165 in the network monitoring apparatus 161 generates a key for the authentication. The key is transmitted through the sending/receiving unit 162, and is also recorded into the recording unit 164 together with information about the transmission destinations. The network device 171 receives the key at the sending/receiving unit 172, then recording the key into the recording unit 174.

When a bus reset occurs, the bus reset detecting unit 166 detects the bus reset and informs the device authentication processing unit 163 of the bus reset. The device authentication processing unit 163, using the key recorded in the recording unit 164, generates information for the authentication (i.e., authentication information) of a network device, then transmitting the authentication information to the network device 171 through the sending/receiving unit 162. The network device 171 receives the authentication information at the sending/receiving unit 172. When receiving the authentication information, the device authentication processing unit 173, using the received authentication information and the key recorded in the recording unit 174, generates authentication information and transmits the authentication information to the network monitoring apparatus 161 through the sending/receiving unit 172. The device authentication processing unit 163 in the network monitoring apparatus 161 receives the authentication intonation through the sending/receiving unit 162, thereby executing the authentication of the device.

Here, the example is mentioned where the network monitoring apparatus 161 perceives the bus reset and generates the information that becomes a trigger for the authentication of the other network devices. The network devices themselves, however, may each sensor the bus reset and generate the authentication information. Also, the network devices themselves may generate the key. In addition, although the authentication is executed based on the single response, it is allowable to execute an authentication that requires a plurality of responses for maintaining the security. Incidentally, as the information before the bus reset, it is also possible to exchange information other than the key, such as the present network configuration and a change in the network configuration that is presumed to occur next.

The network monitoring apparatus and the network device according to the eighteenth embodiment of the present invention are configured as described above. Consequently, it is possible to obtain a network monitoring apparatus and a network device that are able to utilize, after the bus reset, the information exchanged before the bus reset. Also, the pre-bus reset information is utilized as described above, thereby making it possible to obtain the network monitoring apparatus and the network device that are able to execute the authentication of the devices that had existed before the bus reset.

### (Nineteenth Embodiment)

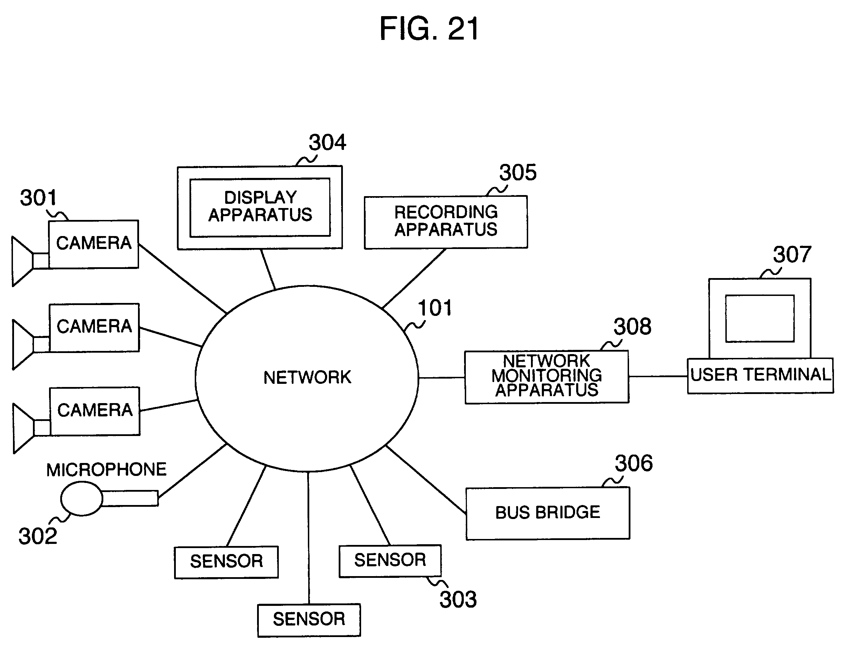

Fig. 21 is a block diagram for indicating a configuration example of a monitoring system according to the nineteenth embodiment of the present invention. The reference numerals denote the following, respectively: 301 a camera, 302 a microphone, 303 a sensor, 304 a display apparatus, 305 a recording apparatus, 306 a bus bridge, 307 a user terminal, 308 a device or a network monitoring apparatus provided with the network monitoring methods according to the first to the twenty-sixth aspects of the present invention described earlier.

Next, referring to Fig. 21, the explanation will be given below regarding the operation of a monitoring system according to the nineteenth embodiment of the present invention. At first, the user, from the user terminal 307, inputs setting items into the network monitoring apparatus 308. Next, the network monitoring apparatus 308 acquires network configuration information, thereby judging whether or not the network configuration is tolerable. If the network configuration is intolerable, the warning is issued to the user. Also, the network monitoring apparatus 308 investigates a transmission delay over the network, thereby judging whether or not a change in the transmission delay is tolerable. If the change in the transmission delay is intolerable, the warning is issued to the user. Also, if the network lies in a tolerable state, the network monitoring apparatus 308, judging that the network is secure, exchanges in advance information that is to become a private key with the network devices 301-306. The generation of a bus reset means a possibility of a change in the network configuration. Accordingly, the network monitoring apparatus 308 acquires the network configuration and the transmission delay at least for every bus reset, thus investigating whether or not they are tolerable.

The issue of the warning means that the network has changed into the state that is intolerable in view of the setting. The user, receiving the warning, utilizes information accompanying the warning, thereby investigating the present state. As the result of the investigation, if the user judges that the state is also secure, the user, through the user terminal 307, informs the network monitoring apparatus 308 of a report that the state is also secure. The network monitoring apparatus 308 accumulates the states as the tolerable states.

The monitoring system according to the nineteenth embodiment of the present invention is configured as described above. Consequently, it is possible to obtain a network monitoring system that allows the network to be kept secure by finding out an unauthorized device that tries to plug itself to the network.

As having been described so far, according to the present invention, it is possible to obtain a network monitoring apparatus, the network monitoring apparatus making it possible to find out the plugging of an unauthorized device to the network by detecting addition or deletion of a device to/from the network and a change in the network configuration through the monitoring of the network configuration. Also, it is possible to obtain a network monitoring apparatus, the network monitoring apparatus making it possible to find out the plugging of an unauthorized device to the network by detecting addition or deletion of a device to/from the network and a change in the network configuration through the monitoring of the transmission delay. Also, it is possible to obtain a network monitoring apparatus, the network monitoring apparatus making it possible to find out the plugging of an unauthorized device to the network by detecting addition or deletion of a device to/from the network and a change in the network configuration through the authentication of a device that had been plugged before the bus reset. Here, the authentication is executed by exchanging the information before the bus reset. Also, it is possible to obtain a network monitoring system that is capable of keeping the network itself secure.

## Claims

1. A network monitoring method, comprising:
a step (401, 402) of observing and recording a network configuration by inquiring of a device, said device having a function of knowing said network configuration; and
a step (403) of recognizing a change in said network configuration by extracting a difference between an observation result and a record of a previous observation result, wherein
it is monitored that an unauthorized device is plugged to said network.

2. A network monitoring apparatus (308), comprising:
a network configuration detecting unit (102) for detecting a network configuration by inquiring of a device, said device having a function of knowing said network configuration;
a network configuration recording unit (103) for recording said network configuration detected;
a network configuration comparing unit (104) for comparing an observation result with a record of a previous observation result; and
a display unit (105) for indicating a warning to a user.

3. A network monitoring method, comprising:
a step (401, 402) of observing and recording a network configuration by inquiring of each device about a plugging state; and
a step (403) of recognizing a change in said network configuration by extracting a difference between an observation result and a record of a previous observation result.

4. A network monitoring apparatus (308), comprising:
a network configuration detecting unit (102) for detecting a network configuration by inquiring of each device about a plugging state;
a network configuration recording unit (103) for recording said network configuration detected;
a network configuration comparing unit (104) for comparing an observation result with a record of a previous observation result; and
a display unit (105) for indicating a warning to a user.

5. A network monitoring method as claimed in Claim 1, further comprising:
a step (410) of providing in advance a condition for being secure; and
a step (408, 409) of automatically judging whether or not said network is secure in accordance with said condition.

6. A network monitoring apparatus (308) as claimed in Claim 2, further comprising:
a tolerable network configuration recording unit (106) for recording in advance a condition for being secure;
a judging unit (107) for automatically judging whether or not said network is secure in accordance with said condition, and
a warning generating unit (108) for warning a user of a change in said network configuration.

7. A network monitoring method as claimed in Claim 3, further comprising:
a step (410) of providing in advance a condition for being secure; and
a step (408, 409) of automatically judging whether or not said network is secure in accordance with said condition.

8. A network monitoring apparatus (308) as claimed in Claim 4, further comprising:
a tolerable network configuration recording unit (106) for recording in advance a condition for being secure;
a judging unit (107) for automatically judging whether or not said network is secure in accordance with said condition; and
a warning generating unit (108) for warning a user of a change in said network configuration.

9. A network monitoring method, comprising:
a step (411, 412) of detecting a reset signal of a network configuration;
a step (401, 402) of observing and recording said network configuration by inquiring of a device, said device having a function of knowing said network configuration; and
a step (403) of recognizing a change in said network configuration by extracting a difference between a record before said reset and a record after said reset.

10. A network monitoring apparatus (308), comprising:
a reset detecting unit (109) for detecting a reset signal of a network configuration;
a network configuration detecting unit (102) for detecting said network configuration by inquiring of a device, said device having a function of knowing said network configuration;
a network configuration recording unit (103) for recording said network configuration detected;
a network configuration comparing unit (104) for comparing an observation result with a record of a previous observation result; and
a display unit (105) for indicating a warning to a user.

11. A network monitoring method, comprising:
a step (401, 402) of observing and recording a network configuration by receiving an identification signal of a device over a network, said identification signal occurring after a reset signal of said network configuration; and
a step (403) of recognizing a change in said network configuration by extracting a difference between a record before said reset and a record after said reset.

12. A network monitoring apparatus (308), comprising:
a reset detecting unit (109) for detecting a reset signal of a network configuration;
a network configuration detecting unit (102) for detecting said network configuration by receiving an identification signal of a device over a network, said identification signal occurring after said reset;
a network configuration recording unit (103) for recording said network configuration detected;
a network configuration comparing unit (104) for comparing an observation result with a record of a previous observation result; and
a display unit (105) for indicating a warning to a user.

13. A network monitoring method as claimed in Claim 9, further comprising:
a step (410) of providing in advance a condition for being secure; and
a step (408, 409) of automatically judging whether or not said network is secure in accordance with said condition.

14. A network monitoring apparatus (308) as claimed in Claim 10, further comprising:
a tolerable network configuration recording unit (106) for recording in advance a condition for being secure;
a judging unit (107) for automatically judging whether or not said network is secure in accordance with said condition; and
a warning generating unit (108) for warning a user of a change in said network configuration.

15. A network monitoring method as claimed in Claim 11, further comprising:
a step (410) of providing in advance a condition for being secure; and
a step (408, 409) of automatically judging whether or not said network is secure in accordance with said condition.

16. A network monitoring apparatus (308) as claimed in Claim 12, further comprising:
a tolerable network configuration recording unit (106) for recording in advance a condition for being secure;
a judging unit (107) for automatically judging whether or not said network is secure in accordance with said condition; and
a warning generating unit (108) for warning a user of a change in said network configuration.

17. A network monitoring method, comprising:
a step (422) of detecting network configurations with the use of a plurality of means; and
a step (425) of judging whether or not there exists a contradiction among said network configurations obtained from said respective means.

18. A network monitoring apparatus (308), comprising:
at least one network configuration detecting unit (102) for detecting network configurations with the use of a plurality of network configuration acquiring means;
a recording unit (102y) for recording said network configurations detected; and
a comparing unit (102z) for investigating whether or not there exists a contradiction among said network configurations detected.

19. A network monitoring method:
having a capability of knowing and managing a network configuration by itself;
becoming a manager managing a network; and
issuing a warning to a monitor or a higher-order network monitoring apparatus when said network monitoring method has failed to become said manager.

20. A network monitoring method:
having a capability of managing an isochronous transfer and a resource thereof by itself;
becoming a manager managing said isochronous transfer; and
issuing a warning to a monitor or a higher-order network monitoring apparatus.

21. A network monitoring method, comprising:
a step (431, 432) of observing and recording a transmission delay between devices; and
a step (433) of recognizing a change in a network configuration by judging a difference between an observation result and a record of a previous observation result to recognize a change in said transmission delay.

22. A network monitoring apparatus (308), comprising:
a transmission delay detecting unit for observing a transmission delay between devices;
a recording unit for recording said transmission delay;
a change detecting unit for detecting a change in said transmission delay by judging a difference between an observation result and a record of a previous observation result and by comparing said difference with a detecting condition; and
a warning generating unit (125) for warning a user of a change in said network configuration.

23. A network monitoring apparatus (308), comprising:
a detecting condition recording unit (121) for setting and recording a transmission delay-detecting condition;
a packet sending unit (126) for sending a transmission delay-measuring packet;
a packet receiving unit (127) for receiving an acknowledgement in response to said transmission delay-measuring packet;
a recording unit (123) for recording said transmission delay;
a change detecting unit (124) for detecting a change in said transmission delay by judging a difference between an observation result and a record of a previous observation result and by comparing said difference with said transmission delay-detecting condition; and
a warning generating unit (125) for warning a user of a change in said network configuration.

24. A network monitoring apparatus (308), comprising:
a packet monitoring unit (122) for monitoring, over a network, a data packet and an acknowledgement in response to said data packet;
a recording unit (123) for recording a transmission delay;
a change detecting unit (124) for detecting a change in said transmission delay by judging a difference between an observation result and a record of a previous observation result and by comparing said difference with a detecting condition; and
a warning generating unit (125) for warning a user of a change in a network configuration.

25. A network monitoring method, comprising:
a step (205) of exchanging information in advance before a network configuration is reset, in a network system including a plurality of devices; and
a step (206, 207) of executing, after said reset, an authentication based on said information exchanged in advance to recognize a device that had existed before the reset, a newly added device, and a deleted device.

26. A network monitoring apparatus (161), comprising:
a key generating unit (165) for generating information exchanged before a network configuration is reset ;
a recording unit (164) for recording said information before said reset;
a reset detecting unit (166) for detecting said reset; and
a device authentication processing unit (163) for executing, after said bus reset, an authentication in accordance with said information exchanged in advance.

27. A network monitoring system, comprising any one of said network monitoring methods and said network monitoring apparatuses (308, 161) as claimed in Claims 1-26.
